(19) Europäisches Patentamt
European Patent Office
Office européen des brevets

(11) EP 3 581 617 A1

(12) EUROPEAN PATENT APPLICATION

(43) Date of publication:
**18.12.2019 Bulletin 2019/51**

(51) Int Cl.:
***C08K 5/42*** *(2006.01)* ***C08K 5/03*** *(2006.01)*
***C08L 33/26*** *(2006.01)*

(21) Application number: **17290168.8**

(22) Date of filing: **21.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Synthomer (UK) Ltd.**
**Harlow, Essex CM20 2BH (GB)**

(72) Inventor: **PERRIN, Renaud**
**CB13PG Cambridge (GB)**

(74) Representative: **f & e patent**
**Fleischer, Engels & Partner mbB, Patentanwälte**
**Braunsberger Feld 29**
**51429 Bergisch Gladbach (DE)**

(54) **COMPOSITIONS COMPRISING A FILM-FORMING POLYMER AND AN AROMATIC ACID OR SALT THEREOF, AND PREPARATION AND USES THEREOF**

(57) The present invention relates to pulverulent and film-forming compositions that comprise at least one film-forming polymer prepared from at least one amide of an ethylenically unsaturated acid and at least one further ethylenically unsaturated monomer, wherein at least a portion of the at least one amide of an ethylenically unsaturated acid is homopolymerized in the absence of the at least one further ethylenically unsaturated monomer. The compositions further comprise at least one aromatic acid according to Formula (I)

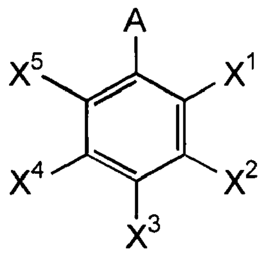

(I)

wherein:
A comprises a carboxylic acid group or a sulfonic acid group, and
$X^1$ to $X^5$ are each independently selected from hydrogen, group A as defined above, group B comprising a hydroxyl or amino group, linear or branched $C_1$-$C_{10}$ alkyl, which may optionally be substituted with one or more heteroatom-containing functional groups but being different from groups A or B, and $C_1$-$C_{10}$ alkoxy, under the proviso that at least one of $X^1$ to $X^5$ is group B,
or a salt of the aromatic acid of Formula (I).

The preparation and uses of such compositions e.g. in the production of construction materials are also disclosed.

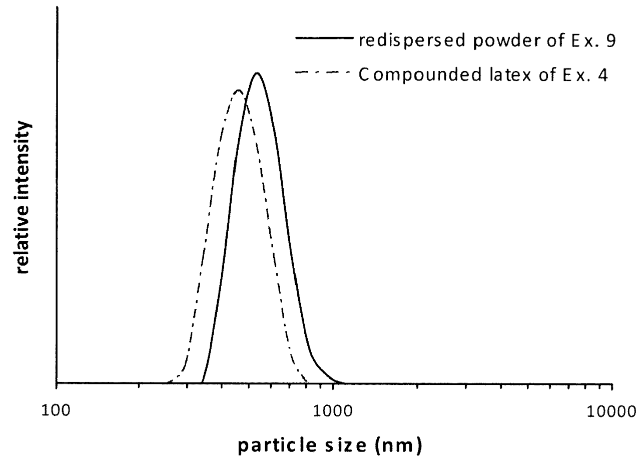


Fig. 1

EP 3 581 617 A1

## Description

Field of the invention

The present invention concerns water-redispersible pulverulent compositions of film-forming polymers and corresponding film-forming liquid compositions. These compositions are particularly useful as an adjuvant to a mineral binder in the formulation of construction materials such as mortars, adhesives, grouts, cement compositions, concrete and coating compositions, especially for the production of flexible waterproof membranes.

Technical background

Film-forming polymers prepared from monomers with ethylenic unsaturation are frequently used as additives in hydraulic inorganic binder compositions in order to improve the processing thereof and the properties achievable after hardening, such as adhesion to various substrates, leak-tightness, hydrophobicity, flexibility, strength or other mechanical properties. Such film-forming polymers may be provided in the form of aqueous dispersions also known as latexes. They can also be provided in the form of powders, which can be redispersed in water. Such redispersible powders can be used in a variety of applications, for example in coating materials, in adhesives for a very wide range of substrates, in construction materials in combination with hydraulic binders for example for tiles adhesives, renders, self-levelling floor screeds etc. Redispersible polymer powders exhibit the advantage, with respect to aqueous dispersions, of being able to be premixed with cement to provide ready-for-use (single pack) pulverulent compositions which can be used at the site of construction, for example, for the manufacture of mortars and concretes intended to be applied to construction materials, for the manufacture of bonding mortars or for the production of protective or decorative coatings inside or outside buildings. The ready-for-use pulverulent compositions are generally convenient to handle, exhibit higher yields per weight unit and incur lower shipping costs as compared to corresponding aqueous dispersions.

Powders of film-forming polymers such as, for example, acrylic or vinyl ester homopolymers and copolymers, are typically obtained by spraying and drying dispersions of the film-forming polymers. The film-forming polymers as such may however be non-water redispersible or be only poorly redispersible in water. In fact, for some applications like the production of a waterproof membrane from a cementitious mortar the adjuvant film-forming polymers as such shall be not soluble or dispersible in water for achieving the desired impermeability to water. Means have therefore been devised in the art to provide readily water-dispersible powder compositions of film-forming polymers, which themselves are non-water redispersible or only poorly redispersible in water.

Redispersibility can for example be conferred on to a spray dried, or coagulated, dried powder of a film-forming polymer by the incorporation of so-called modifying agents, also referred to as redispersibility aids. The modifying agent(s) is typically added to the dispersion before spray drying or coagulation and is thus incorporated into the powder formed upon drying or coagulation. Various different redispersibility aids have been proposed in the art such as a (poly)aromatic-formaldehyde-sulphonates as disclosed in DE 2445813A1, salts of naphthalenesulphonic acid-formaldehyde-condensation products and/or vinylpyrrolidone-vinyl acetate copolymers as disclosed in DE 3143070 A1 and EP 0 078 449 A2, naphthalene sulphonates as disclosed in US Pat. No. 6,391,952, a colloidal stabilizer comprising a chelating agent as disclosed in US 2011/0160347 A1 and US 2011/0160350 A1 or dihydroxydiphenyl sulfone derivatives as disclosed in US 2007/0167539 A1.

While such known modifying agents may impart redispersibility to powders to some extent, the resulting powders may not provide satisfactory performance in certain applications such as waterproofing membrane applications and/or exhibit insufficient storage stability.

Some of the modifying agents known from the prior art as mentioned above are moreover relatively expensive and/or complicated to synthesize, requiring for instance a multistage synthesis.

For example, modifying agents comprising a polyaromatic structure such as those containing a naphthalene moiety are not only expensive, but also toxicologically critical. Such substances and their use are frequently subject to governmental regulations. Particularly, they may for instance not be registered in accordance with the European Union regulation introduced to evaluate the potential impacts of chemical substances on both human health and the environment: Registration, Evaluation, Authorisation and Restriction of Chemicals (REACH) introduced on the 18$^{th}$ December 2006.

Moreover, an issue frequently encountered with conventional modifying agents is that they impart an intense coloration to the resultant pulverulent compositions. For example dihydroxydiphenyl sulfone derivatives as disclosed in US 2007/0167539 A1 or naphthalene sulphonates as disclosed in US Pat. No. 6,391,952 typically yield a pink and or brown coloration of the resultant powder. An intense coloration of the pulverulent composition is however undesirable in many applications such as for the production of flexible water proof membranes which are to be over-coated with a color of choice.

An intense coloration can for example be avoided by using an amino acid or a salt thereof such as mono sodium glutamate as modifying agent for a water-insoluble film-forming polymer prepared from at least one ethylenically unsaturated monomer and at least one monomer selected from monomers having a carboxylic function and acrylamide or methacrylamide as taught in US Pat. No. 6,080,806, however, it has been found that the pulverulent compositions obtainable thereby are not suitable for the preparation of waterproof membranes.

Accordingly, there is a persistent need for alternative redispersing aids and redispersible pulverulent compositions of polymers comprising the same, which mitigate or overcome at least some of the above-mentioned deficiencies associated with the conventional redispersing aids and redispersible pulverulent compositions known from the prior art.

It is thus an objective of the present invention to provide novel pulverulent compositions based on a film-forming polymer which may be readily redispersed in aqueous media making use of a redispersing aid, which is inexpensive, environmentally and toxicologically benign, with its use not being substantially restricted by governmetal regulatations, preferably being REACH compliant, and which does not impart an intense coloration to the pulverulent compositions or otherwise adversely affect the properties thereof. The pulverulent composition or a film-forming composition obtainable therefrom by redispersion in a liquid carrier medium should provide satisfactory performance in a variety of different applications, including those where redispersible powders are commonly used, preferably enabling it to meet the demanding requirements for waterproofing membranes, and to exhibit good storage stability. For instance, such composition should be utilizable in all the fields of use which are typical for the application of latexes for producing coatings, in particular paints or as a binder component in compositions for the coating of paper, and adhesive compositions, in particular pressure-sensitive adhesives or tiling adhesives. It should also be usable as an additive in formulations comprising a hydraulic binder such as cement or plaster of the grout, mortar or concrete type, enabling an improvement in one or more application properties of the construction material such as resistance to cracking, adhesion to various supports, impact and abrasion strengths, flexural and compressive strengths, or flexibility.

The present invention also aims to provide a process enabling the preparation of such a pulverulent composition in a simple and cost-efficient manner.

Summary of the invention

Surprisingly the present inventor found that the above objectives could be attained by a water-dispersible pulverulent composition as defined in claim 1. The pulverulent composition according to the present invention comprises at least one film-forming polymer prepared from at least one amide of an ethylenically unsaturated acid, preferably (meth)acrylamide, and at least one further ethylenically unsaturated monomer, wherein at least a portion of the at least one amide of an ethylenically unsaturated acid is homopolymerized in the absence of the at least one further ethylenically unsaturated monomer. The pulverulent composition further comprises at least one aromatic acid according to Formula (I)

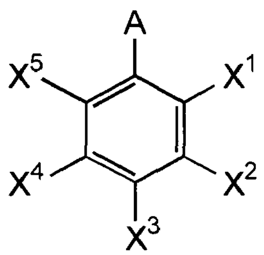

(I)

wherein:

A comprises a carboxylic acid group or a sulfonic acid group, and $X^1$ to $X^5$ are each independently selected from hydrogen, group A as defined above, group B comprising a hydroxyl or amino group, linear or branched $C_1$-$C_{10}$ alkyl, which may optionally be substituted with one or more heteroatom-containing functional groups but being different from groups A or B, and $C_1$-$C_{10}$ alkoxy, under the proviso that at least one of $X^1$ to $X^5$ is group B, or a salt of the aromatic acid of Formula (I).

The present invention also relates to a process for producing the water-dispersible pulverulent composition of the present invention. The process comprises:

(i) polymerizing at least one amide of an ethylenically unsaturated acid and at least one further ethylenically unsaturated monomer in an aqueous emulsion to form a latex, wherein at least a portion of the at least one amide of an ethylenically unsaturated acid is homopolymerized before addition of the least one further ethylenically unsaturated monomer to the reaction medium,

(ii) adding at least one aromatic acid according to Formula (I) or a salt thereof to the aqueous medium before, during

and/or after the polymerization, and
(iii) removing water from the latex.

The present invention also relates to film-forming compositions comprising at least one film-forming polymer as set forth above, at least one aromatic acid according to Formula (I) or a salt thereof, and a liquid carrier medium.

It is moreover directed towards construction materials, which comprise the water-dispersible pulverulent composition and/or the film-forming composition of the present invention and a mineral binder.

Furthermore, the present invention also relates to the use of the water-dispersible pulverulent composition and/or the film-forming composition of the present invention as an adjuvant to a mineral binder and/or in grouts, mortars, adhesives, cements, concrete or coating compositions. The use of the water-dispersible pulverulent composition and/or the film-forming composition of the present invention as an additive in the production of carpets, as an additive or rheology modifier in oilfield applications or as a protective coating or as a control release agent in agrochemical formulations is also within the scope of the present invention.

The inventor of the present invention surprisingly found out that the use of an aromatic acid according to Formula (I) or a salt thereof as an additive to a latex of a copolymer derived from at least one amide of an ethylenically unsaturated acid and one or more further ethylenically unsaturated monomers efficiently improves redispersibility of pulverulent compositions obtainable from such compounded latexes in aqueous media. Without wishing to be bound by any theory, this effect is believed to arise from such aromatic acid compounds or salts thereof being capable of efficiently interacting, e.g. by the formation of hydrogen bonds, with amide-functional moities present in the copolymer, particularly structural units thereof derived by homopolymerization of the at least one amide of an ethylenically unsaturated acid. They could thus be bound closely to the surface of the latex particles when removing the liquid carrier medium from the latex to produce a pulverulent composition. This could facilitate a very efficient mechanism by which the resulting dried modified latex particles can be rewetted and redispersed in aqueous media. Unlike some of the additives conventionally used in the prior art as redispersibility aids the aromatic acids according to Formula (I) and salts thereof are moreover typically non-hazardous and non-toxic and comply e.g. with REACH regulations for use in the European Union. Also, they do not impart an undesirable intense coloration. The compositions according to the present invention making use of such aromatic acid(s) or salt(s) thereof were found to be particularly useful for flexible waterproof membrane applications fulfilling the requirements according to pertinent standard EN 14891-2012.

These and further features and advantages of the present invention will be set forth in the following description in more detail.

## Brief description of the drawings

Fig. 1 represents a plot of the particle size distribution of an aqueous dispersion obtained by redispersing an exemplary pulverulent composition according to the present invention in water compared to the particle size distribution of the corresponding compounded latex before spray drying.

Fig. 2 represents a plot of the particle size distribution of an aqueous dispersion obtained by redispersing an exemplary pulverulent composition according to the present invention in water for the pulverulent composition as spray dried compared to the pulverulent composition after 3 weeks storage.

## Detailed description of the present invention

As set forth above, the compositions according to the present invention comprise at least one film-forming polymer. The term "film-forming" as used herein means capable of forming a film when applied to a support upon drying and/or curing, or where aided by cooling. The film-forming polymer is prepared from at least one amide of an ethylenically unsaturated acid and at least one further ethylenically unsaturated monomer. The film-forming polymer can be prepared in a manner known as such in the art, e.g. by subjecting a monomer mixture that comprises at least one amide of an ethylenically unsaturated acid and at least one further ethylenically unsaturated monomer to free-radical emulsion polymerization or mini-emulsion polymerization in an aqueous reaction medium. Alternatively, the film-forming polymer can also be provided from such monomer mixture by other known polymerization techniques such as suspension polymerization, solution polymerization or polymerization in bulk, be it by radical-driven polymerization, including the so called controlled radical polymerization techniques such as RAFT, ATRP, NMP, or a combination of one or more thereof, or by other polymerization mechanisms such as anionic or cationic polymerization.

As set forth above, the monomers used to prepare the film-forming polymer comprise at least one amide of an ethylenically unsaturated acid. Any kind of amide of an ethylenically unsaturated acid can be used according to the

present invention. By amide is meant herein a compound, which is formally derived from ammonia, a primary amine or a secondary amine by condensation reaction with an acid. Accordingly, an amide generally exhibits the structure S-$NR_1R_2$, wherein S is a residual moiety derived from an acid and $R_1$ and $R_2$ are each individually selected from hydrogen or a monovalent organic group. For the amide(s) of an ethylenically unsaturated acid used according to the present invention the moiety S can e.g. be derived from any ethylenically unsaturated acid, i.e. an acid that comprises one or more C=C double bonds. Suitable acids comprise carboxylic acids or other oxo acids such as sulfur- or phosphorous-containing oxoacids like for example sulfonic acid or phosphorous acid, which comprise one or more C=C double bonds. Typically the moiety S is an acyl group derived from an ethylenically unsaturated carboxylic acid such as methacrylic acid, acrylic acid, maleic acid or fumaric acid.

Non-limiting examples of amides of an ethylenically unsaturated acid, which can be used for preparing the film-forming polymer according to the present invention include acrylamide, methacrylamide and derivatives thereof, wherein at least one of the hydrogen atoms of the amide group is replaced by an organic group such as an organic group comprising from 1 to 20 carbon atoms. The organic group can e.g. be an alkyl group, e.g. a $C_1$-$C_{18}$ alkyl group, a substituted derivative thereof comprising one or more heteroatoms such as oxygen, sulfur and/or nitrogen, or an aromatic group such as phenyl. Non-limiting examples include N-alkyl(meth)acrylamides and N,N-dialkyl(meth)acrylamides such as N-methyl(meth)acrylamide, N-ethyl(meth)acrylamide, N,N-dimethyl(meth)acrylamide, N,N-diethyl(meth)acrylamide, N-isopropyl(meth)acrylamide, N-tert-butyl(meth)acrylamide, aryl-substituted (meth)acrylamides such as N-phenyl(meth)acrylamide and N,N-diphenyl(meth)acrylamide, and (meth)acrylamides with one or more oxgen-containing substituent(s) such as diacetone acrylamide, N-methylol(meth)acrylamide, N-methoxymethyl-(meth)acrylamide, N-(3-methoxypropyl)(meth)acrylamide, N-(isobutoxymethyl)(meth)acrylamide, N-acetoxymethyl(meth)acrylamide, N-(2,2-dimethoxy-1-hydroxyethyl)(meth)acrylamide, N-(n-butoxymethyl)(meth)acrylamide, 2-hydroxypropyl(meth)acrylamide or N-(1,1-dimethyl-3-oxobutyl)(meth)acrylamide.

Also amide analogues of unsaturated dicarboxylic acids such N-methyl maleimide, N-ethyl maleimide, N-phenyl maleimide, 2-methyl maleimide, 2-ethyl-3-methyl maleimide, 2-methyl-2-butenediamide or fumaramide can be used. Furthermore, amide-based cross-linking agents such as for example piperazine diacrylamide, 2-propenamide, and bis-amides such as N,N'-hexamethylenebis((meth)acrylamide), N,N'-ethylenebis((meth)acrylamide), N,N'-methylenebis((meth)acrylamide), N,N'-ethylenebis((meth)acrylamide) and N,N'-(1,2-dihydroxyethylene)bis((meth)acrylamide) can be used. In a less-preferred embodiment, polymers containing N-vinyl amide bearing units such as N-vinyl acetamide, N-vinyl lauramide, N-vinyl stearamide, or cyclic esters such as N-vinyl pyrrolidone, N-vinyl caprolactam may be likewise used as amide of an ethylenically unsaturated acid. Alternatively or additionally the amide of an ethylenically unsaturated acid, such as those described above, might be present in an oligomeric form, with a terminal ethylenic unsaturation, generated by, for example, but not exclusively, catalytic chain transfer of (meth)acrylamide in the presence of a cobalt complex. The monomer mixture used to prepare the film-forming polymer can comprise a single amide of an ethylenically unsaturated acid such as any one of the above-mentioned compounds or a mixture or combination of two or more amides of an ethylenically unsaturated acid.

Preferably, the amide of an ethylenically unsaturated acid used to prepare the film-forming polymer comprises (meth)acrylamide. The expression "(meth)acrylamide" and the like as used herein refers collectively to the acrylamide and the methacrylamide compound. The amide of an ethylenically unsaturated acid used to prepare the film-forming polymer may thus for example comprise either acrylamide or methacrylamide, or a mixture of both of acrylamide and methacrylamide. Particularly preferred is the use of a mixture of acrylamide and methacrylamide.

Typically, the at least one amide of an ethylenically unsaturated acid is used in an amount of at least 0.5 wt.%, such as at least 1.0 wt.%, or at least 1.5 wt.%, or at least 2.5 wt.%, or at least 3 wt.%, or at least 3.5 wt.%, or at least 4 wt.%, or at least 5 wt.%, or at least 6 wt.%, or at least 7 wt.%, or at least 8 wt.%, or at least 9 wt.%, or at least 9.5 wt.%, based on the total weight of the ethylenically unsaturated monomers used for preparing the film-forming polymer. The at least one amide of an ethylenically unsaturated acid may be used in an amount of no more than 20 wt.%, such as no more than 18 wt.%, or no more than 16 wt.%, or no more than 14 wt.%, or no more than 12 wt.%, or no more than 10 wt.%, based on the total weight of the ethylenically unsaturated monomers used for preparing the film-forming polymer. A person skilled in the art will appreciate that any range between any of the explicitly disclosed lower and upper limit is herein disclosed. For example, at least one amide of an ethylenically unsaturated acid can be used in an amount in a range from 0.5 to 20.0 wt.%, such as from 1.0 to 15 wt.%, or from 1.5 to 10 wt.%, or from 2.0 to 8 wt.%, based on the total weight of the ethylenically unsaturated monomers in the monomer mixture used for preparing the film-forming polymer.

As set forth above, the film-forming polymer used according to the present invention is prepared from one or more further ethylenically unsaturated monomer used in addition to the at least one amide of an ethylenically unsaturated acid. The further ethylenically unsaturated monomer used for forming the film-forming polymer can be any ethylenically unsaturated monomer that is different from an amide of an ethylenically unsaturated acid. By "ethylenically unsaturated" it is meant that the compound comprises at least one C=C moiety. The further ethylenically unsaturated monomer can for example comprise one or more monoethylenically unsaturated monomers, one or more polyethylenically unsaturated

monomers, such as a diethylenically unsaturated monomer (i.e. a monomer that comprises two C=C moieties per molecule), or a combination or mixture of monoethylenically and polyethylenically unsaturated monomers. The one or more further ethylenically unsaturated monomers are generally used in a total amount, which balances with the amount of the at least one amide of an ethylenically unsaturated acid to yield in total 100 wt.%, based on the total weight of the ethylenically unsaturated monomers used for preparing the film-forming polymer.

For example, the at least one further ethylenically unsaturated monomer, which can be used for preparing the film-forming polymer, can be selected from ethylenically unsaturated acids, esters of ethylenically unsaturated acids, vinyl esters, vinylaromatic monomers, diene monomers, olefins, monomers having at least 2 ethylenically unsaturated groups, and mixtures or combinations thereof.

For example, the at least one further ethylenically unsaturated monomer used to prepare the film-forming polymer can comprise one or more ethylenically unsaturated acid. Herein the term "ethylenically unsaturated acid" means any polymerizable organic compound, which comprises at least one C=C bond and at least one acid functional group or a salt thereof. The term "acid group" means a polar group capable of donating a proton in aqueous medium or a precursor to such polar group. Non-limiting examples of acid groups include carboxylic acid, anhydride, sulfonic acid, sulphuric acid, phosphonic acid and phosphoric acid groups. Typically the at least one acid group is selected from a carboxylic acid group, an anhydride group, a sulfonic acid group or a combination thereof. The ethylenically unsaturated acid monomer may for example comprise from 3 to 12, such as from 3 to 8 or from 3 to 6 carbon atoms. Besides the at least one acid group or salt thereof the ethylenically unsaturated acid monomer may optionally comprise one or more additional functional group(s) such as hydroxyl, ester, amino and/or ether. Ethylenically unsaturated acid monomers suitable for use in the present invention include e.g. monocarboxylic acid and dicarboxylic acid monomers and monoesters of dicarboxylic acids. Preferably the at least one ethylenically unsaturated acid monomer, if present, is selected from ethylenically unsaturated aliphatic mono- or dicarboxylic acids or anhydrides which contain from 3 to 5 carbon atoms. Non-limiting examples of suitable monocarboxylic acid monomers include acrylic acid, methacrylic acid, crotonic acid and salts thereof. Suitable dicarboxylic acid monomers include for example fumaric acid, itaconic acid, maleic acid and salts thereof. A suitable anhydride monomer is for instance maleic anhydride. Non-limiting examples of other suitable ethylenically unsaturated acid monomers include vinyl acetic acid, vinyl lactic acid, vinyl sulfonic acid, 2-methyl-2-propene-1-sulfonic acid, phenyl vinylsulfonate, sodium 4-vinylbenzenesulfonate, 3-allyloxy-2-hydroxy-1-propanesulfonic acid, 4-styrene sulfonic acid, 2-acrylamido-2-methyl-1-propanesulfonic acid and salts thereof.

If used, the at least one optional ethylenically unsaturated acid monomer may be present in the monomer mixture used for preparing the film-forming polymer for example in an amount of at least 0.1 wt.%, at least 0.3 wt.%, at least 0.5 wt.%, at least 0.7 wt.%, at least 0.9 wt.%, at least 1 wt.%, at least 1.2 wt.%, at least 1.4 wt.%, at least 1.6 wt.%, at least 1.8 wt.%, at least 2 wt.%, at least 2.5 wt.%, or at least 3 wt.%, based on the total weight of the monomers used for preparing the film-forming polymer. The ethylenically unsaturated acid monomer can for example be used in an amount of up to 99.5 wt.%, such as up to 99 wt.%, up to 90 wt.%, up to 80 wt.%, up to 70 wt.%, up to 50 wt.%, or up to 30 wt.%, preferably no more than 20 wt.%, no more than 10 wt.%, no more than 9 wt.%, no more than 8.5 wt.%, no more than 8 wt.%, no more than 7.5 wt.%, no more than 7 wt.%, no more than 6.5 wt.%, no more than 6 wt.%, no more than 5.5 wt.%, or no more than 5 wt.%, based on the total weight of the monomers used for preparing the film-forming polymer. A person skilled in the art will appreciate that any range defined by an explicitly disclosed lower limit and an explicitly disclosed upper limit is disclosed herewith.

Esters of ethylenically unsaturated acids can likewise be used as further ethylenically unsaturated monomer for preparing the film-forming polymer. Esters of ethylenically unsaturated acids are compounds derivable by esterification of an ethylenically unsaturated acid or anhydride such as any of those mentioned above. Non-limiting examples are for instance esters of acrylic acid and methacrylic acid, collectively referred to herein as (meth)acrylic acid. Esters of (meth)acrylic acid are also referred to herein as "meth(acrylic" esters". Suitable esters of (meth)acrylic acid that can be used according to the present invention include for example n-alkyl esters, iso-alkyl esters or tert-alkyl esters of (meth)acrylic acid in which the alkyl group has from 1 to 17 carbon atoms. Alkyl esters of (meth)acrylic acids may in particular be $C_1$-$C_{10}$ alkyl (meth)acrylates. Non-limiting examples of such (meth)acrylate monomers include methyl acrylate, isopropyl acrylate, n-propyl acrylate, n-butyl acrylate, isobutyl acrylate, ethyl acrylate, hexyl acrylate, tert-butyl acrylate, 2-ethyl-hexyl acrylate, isooctyl acrylate, 4-methyl-2-pentyl acrylate, 2-methylbutyl acrylate, lauryl acrylate, methyl methacrylate, n-butyl methacrylate, isobutyl methacrylate, ethyl methacrylate, tert-butyl methacrylate, isopropyl methacrylate, n-propyl methacrylate, hexyl methacrylate, 2-ethylhexyl methacrylate, 3,3-dimethylbutyl methacrylate, cyclohexyl methacrylate and cetyl methacrylate.

It is also possible to use substituted esters of ethylenically unsaturated acids as monomer in the preparation of the film-forming polymer. Thus one or more hydrogen atoms of an alkyl group of an alkyl ester of an ethylenically unsaturated acid such as (meth)acrylic acid used as monomer can be replaced by a functional group such as e.g. a hydroxyl, alkoxy, polyether or amino group. For example, hydroxy alkyl(meth)acrylate monomers can be used to prepare the film-forming polymer, including e.g. hydroxyalkyl (meth)acrylate monomers which are additional products of the respective acid with ethylene oxide, propylene oxide, higher alkylene oxides or a combination thereof. Typically the

substituted alkyl group comprises from 1 to 17 carbon atoms. Non-limiting specific examples include hydroxyethyl acrylate, hydroxypropyl acrylate, hydroxyethyl methacrylate, hydroxypropyl methacrylate, hydroxybutyl methacrylate, hydroxybutyl acrylate, hydroxyhexyl acrylate, hydroxyhexyl methacrylate, hydroxyethylhexyl acrylate and hydroxyethylhexyl methacrylate. Other examples of useful hydroxyl functional (meth)acrylate monomers include acrylic esters prepared from glycidyl esters of $C_2$-$C_{12}$ carboxylic acids, for example ACE™ hydroxyl acrylate monomers commercially available from Hexion Inc. Further examples of substituted esters of ethylenically unsaturated acids that can be used as monomer in the preparation of the film-forming polymer are alkoxyalkyl (meth)acrylate monomers such as, without being limited thereto, methoxyethyl methacrylate, ethoxyethyl methacrylate, methoxyethyl acrylate, ethoxyethyl acrylate, butoxyethyl methacrylate, methoxybutyl acrylate and methoxyethoxyethyl acrylate.

If used, the monomers being esters of an ethylenically unsaturated acid are typically used in an amount of at least 0.5 wt.%, at least 1 wt.%, at least 2 wt.%, at least 5 wt.%, at least 10 wt.%, at least 15 wt.%, at least 20 wt.%, at least 30 wt.%, at least 40 wt.%, at least 50 wt.%, at least 60 wt.%, at least 70 wt.%, at least 80 wt.%, at least 90 wt.%, or at least 99 wt.%, based on the total weight of the monomers used for preparing the film-forming polymer. The one or more esters of an ethylenically unsaturated acid can for example be used in an amount of up to 99.5 wt.%, up to 99 wt.%, up to 95 wt.%, up to 90 wt.%, up to 85 wt.%, up to 80 wt.%, up to 75 wt.%, up to 70 wt.%, up to 60 wt.%, up to 50 wt.%, up to 30 wt.%, up to 20 wt.%, up to 10 wt.%, up to 8 wt.%, up to 5 wt.%, up to 3 wt.%, up to 2 wt.%, or up to 1 wt.%, based on the total weight of the monomers used for preparing the film-forming polymer. A person skilled in the art will appreciate that any range defined by an explicitly disclosed lower limit and an explicitly disclosed upper limit is disclosed herewith.

Suitable vinyl ester compounds which can be used as further ethylenically monomer according to the present invention include vinyl esters of carboxylic acids, such as a $C_2$-$C_{18}$ carboxylic acid, for example vinyl acetate, vinyl propionate, vinyl butyrate, vinyl benzoate, vinyl-2-ethylhexanoate, vinyl stearate, and VeoVa™ 9 vinyl ester, or the vinyl ester of versatic acid, commercially available as VeoVa™ 10 vinyl ester from Hexion Inc.

If used, the vinyl ester compound(s) are typically used in an amount of at least 0.1 wt.%, at least 0.5 wt.%, at least 1 wt.%, at least 2 wt.%, at least 3 wt.%, or at least 5 wt.%, based on the total weight of the monomers used for preparing the film-forming polymer. The vinyl ester compound(s) can for example be used in an amount of up to 99.5 wt.%, up to 95 wt.%, up to 90 wt.%, up to 80 wt.%, up to 70 wt.%, up to 60 wt.%, up to 50 wt.%, up to 40 wt.%, up to 30 wt.%, up to 25 wt.%, up to 20 wt.%, up to 15 wt.%, or up to 10 wt.%, based on the total weight of the monomers used for preparing the film-forming polymer. A person skilled in the art will appreciate that any range defined by an explicitly disclosed lower limit and an explicitly disclosed upper limit is disclosed herewith.

Vinyl-aromatic monomers, which can be used for preparing the film-forming polymer include, for example, without being limited thereto, styrene, $\alpha$-methylstyrene, t-butyl styrene, vinyltoluene, divinylbenzene, p-tert-butylstyrene, 2,4-dimethylstyrene, 2-methylstyrene, 3-methylstyrene, 4-methylstyrene, 2-ethylstyrene , 3-ethylstyrene, 4-ethylstyrene, 2,4-diisopropylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinyl naphthalene, vinylxylene, 2-vinylpyridine , 4-vinylpyridine, 1,1-diphenylethylenes and substituted 1,1-diphenylethylenes, 1,2-diphenylethene and substituted 1,2-diphenylethylenes. Mixtures of two or more of the vinyl-aromatic compounds may also be used. Vinyl-aromatic monomers, which may preferably be used according to the present invention, include for example styrene and/or $\alpha$-methylstyrene.

If used, the vinyl-aromatic monomer(s) are typically used in an amount of at least 0.5 wt.%, at least 1 wt.%, at least 2 wt.%, at least 5 wt.%, at least 10 wt.%, or at least 20 wt.%, based on the total weight of the monomers used for preparing the film-forming polymer. The vinyl-aromatic monomer(s) can for example be used in an amount of up to 99.5 wt.%, up to 90 wt.%, up to 80 wt.%, up to 70 wt.%, up to 60 wt.%, up to 50 wt.%, up to 40 wt.%, or up to 30 wt.%, based on the total weight of the monomers used for preparing the film-forming polymer. Preferably, the vinyl-aromatic monomer(s), if any, are used in an amount of no more than 70 wt.%. A person skilled in the art will appreciate that any range defined by an explicitly disclosed lower limit and an explicitly disclosed upper limit is disclosed herewith.

Furthermore, one or more olefins can be used as co-monomer for preparing the film-forming polymer such as linear or branched $\alpha$-olefins. Examples of suitable olefin monomers include ethylene and propylene. If used, an olefin monomer such as ethylene may preferably be employed in combination with one or more vinyl ester of a carboxylic acid such as any of those described above, especially vinyl acetate.

If used, the olefin(s) are typically used in an amount of at least 0.1 wt.%, at least 0.2 wt.%, at least 0.5 wt.%, at least 1 wt.%, at least 5 wt.%, or at least 10 wt.%, based on the total weight of the monomers used for preparing the film-forming polymer. The olefin(s) can for example be used in an amount of up to 99.5 wt.%, such as up to 90 wt.%, up to 70 wt.%, up to 50 wt.%, up to 40 wt.%, up to 30 wt.%, up to 20 wt.%, or up to 15 wt.%, based on the total weight of the monomers used for preparing the film-forming polymer. A person skilled in the art will appreciate that any range defined by an explicitly disclosed lower limit and an explicitly disclosed upper limit is disclosed herewith.

The at least one further ethylenically unsaturated monomer used to prepare the film-forming polymer can also comprise one or more diene monomers. A diene monomer refers to a polymerizable compound, which comprises two C=C bonds. Particularly suitable are conjugated diene monomers. Conjugated diene monomers are polymerizable

organic compounds which comprise two C=C bonds in conjugation to each other, i.e. the C=C bonds are separated from each other by one single bond. Conjugated diene monomers suitable for the preparation of the film-forming polymer according to the present invention typically comprise from 4 to 10, preferably from 4 to 8 or from 4 to 6 carbon atoms. Conjugated diene monomers can for example be hydrocarbon compounds or comprise additional heteroatoms such as e.g. one or more halogen atom, preferably being hydrocarbon compounds. Non-limiting examples of suitable conjugated diene monomers include e.g. 1,3-butadiene, 1,3-pentadiene, isoprene, 1,3-hexadiene and 2,3-dimethyl-1,3-butadiene, 2-chloro-1,3-butadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, $\alpha$-3,7-dimethyl-1,3,7-octatriene, $\beta$-3,7-dimethyl-1,3,6-octatriene, 3,7,11-trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene and 2-methyl-3-isopropyl-1,3-butadiene and 1,3-cyclohexadiene. 1,3-butadiene, isoprene and combinations thereof represent conjugated dienes, which are preferably used according to the present invention.

If used, the diene monomer(s) are typically used in an amount of at least 0.5 wt.%, at least 1 wt.%, at least 5 wt.%, at least 10 wt.%, at least 15 wt.%, at least 20 wt.%, or at least 25 wt.%, based on the total weight of the monomers used for preparing the film-forming polymer. The diene monomer(s) can for example be used in an amount of up to 99.5 wt.%, up to 90 wt.%, up to 70 wt.%, up to 60 wt.%, up to 50 wt.%, or up to 40 wt.%, based on the total weight of the monomers used for preparing the film-forming polymer. Preferably, the diene monomer(s), if used, is used in an amount of no more than 70 wt.%, based on the total weight of the monomers used for preparing the film-forming polymer. A person skilled in the art will appreciate that any range defined by an explicitly disclosed lower limit and an explicitly disclosed upper limit is disclosed herewith.

Furthermore, monomers having at least two ethylenically unsaturated functional groups can be used in the preparation of the film-forming polymer. Suitable bifunctional monomers which are capable of providing internal crosslinking and branching in the polymer (herein known as multifunctional monomers), may be selected for example from divinyl benzene and diacrylates and di(meth)acrylates. Examples are ethylene glycol di(meth)acrylate, hexanediol di(meth)acrylate, tripropylene glycol di(meth) acrylate, butanediol di(meth)acrylate, neopentyl glycol di(meth)acrylate, diethylene glycol di(meth)acrylate, triethylene glycol di(meth)acrylate, and dipropylene glycol di(meth)acrylate. Alternatively, or additionally the suitable bifunctional monomer may for example be diallyl maleate. The monomers having at least two ethylenically unsaturated functional groups are preferably selected from divinyl benzene 1,2-ethyleneglycol di(meth)acrylate, 1,4-butanediol di(meth)acrylate and 1,6-hexanediol di(meth)acrylate.

If used, the monomer(s) having at least two ethylenically unsaturated functional groups are typically used in an amount of at least 0.1 wt.%, at least 0.2 wt.%, at least 0.5 wt.%, at least 1 wt.%, at least 2 wt.%, or at least 3 wt.%, based on the total weight of the monomers used for preparing the film-forming polymer. The monomer(s) having at least two ethylenically unsaturated groups can for example be used in an amount of up to 20 wt.%, up to 15 wt.%, up to 10 wt.%, or up to 5 wt.%, based on the total weight of the monomers used for preparing the film-forming polymer. A person skilled in the art will appreciate that any range defined by an explicitly disclosed lower limit and an explicitly disclosed upper limit is disclosed herewith.

Furthermore, any other ethylenically unsaturated compound different from any of the compounds given above may be used in the preparation of the film-forming polymer. Non-limiting examples include for instance ethylenically unsaturated heterocyclic compounds such as N-vinyl pyrrolidone, N-vinyl caprolactam, 1-vinyl imidazole, allyl compounds such as N-allylurea, vinyl ethers, vinyl halides, such as vinyl chloride or vinylidene chloride, ethylenically unsaturated organosilicon compounds and vinyl compounds containing sulfonate ester, silane and/or N-methylolamide groups.

In a preferred variant of the present invention, at least one ethylenically unsaturated sulphonate monomer is used for preparing the film-forming polymer. Suitable ethylenically unsaturated sulphonate monomers include, without being limited thereto, 2-acrylamido-2-methylpropane sulfonic acid (AMPS), sodium methallylsulphonate or a combination thereof. The ethylenically unsaturated sulphonate monomer(s) are typically used in an amount of at most 4 wt.%, more preferably at most 3 wt.% and most preferred at most 2 wt. %, such as in an amount of from 0.01 to 4 wt.% or 0.1 to 2 wt.%, based upon the total weight of the ethylenically unsaturated monomers used for preparing the film-forming polymer. These monomers are typically added during the polymerization. Without wishing to be bound by any theory it is believed that they contribute to a colloidal stability of the latex.

Typically, the film-forming polymer according to the present invention is a copolymer of (meth)acrylamide, such as a combination of acrylamide and methacrylamide, and one or more further ethylenically unsaturated monomers as described above.

Preferably, the film-forming polymer is prepared from at least (meth)acrylamide and at least one (meth)acrylic ester, which can for example be any ester of (meth)acrylic acid as described above such as for example an alkyl (meth)acrylate, a hydroxyalkyl (meth)acrylate or a combination thereof.

The film-forming polymer can furthermore preferably be prepared from at least (meth)acrylamide, and at least one of a vinyl ester of a $C_2$ - $C_{18}$ carboxylic acid, such as for example vinyl acetate, the vinyl ester of versatic acid, or a

combination of both.

The film-forming polymer can furthermore preferably be prepared from at least (meth)acrylamide, and at least one of a vinylaromatic monomer and a diene monomer, which can each be any vinylaromatic monomer or diene monomer as described above.

Particularly, the film-forming polymer can be prepared from at least (meth)acrylamide, at least one (meth)acrylic ester, and at least one of a vinylaromatic monomer and a diene monomer. Herein it is preferred that the film-forming polymer (a) is prepared from at least (meth)acrylamide, at least one (meth)acrylic ester, and at least one vinylaromatic monomer.

The (meth)acrylic ester, if used for preparing the film-forming polymer, can in particular comprise an $C_1$-$C_{10}$ alkyl (meth)acrylate and/or a $C_1$-$C_{10}$ hydroxyalkyl (meth)acrylate.

The vinylaromatic monomer, if used for preparing the film-forming polymer, can in particular comprise styrene.

The diene monomer, if used for preparing the film-forming polymer, can in particular comprise butadiene.

The film-forming polymer can thus for example preferably be:

- A copolymer of (meth)acrylamide and one or more $C_1$-$C_{10}$ esters of unsaturated carboxylic acids, such as in particular (meth)acrylate monomer(s),
- A copolymer of (meth)acrylamide and one or more $C_1$-$C_{10}$ esters of unsaturated carboxylic acids, such as in particular (meth)acrylate monomer(s), and at least one vinyl aromatic monomer, such as styrene,
- A copolymer of (meth)acrylamide and one or more $C_1$-$C_{10}$ esters of unsaturated carboxylic acids, such as in particular (meth)acrylate monomer(s), and at least one diene monomer, such as butadiene,
- A copolymer of (meth)acrylamide and one or more $C_1$-$C_{10}$ esters of unsaturated carboxylic acids, such as in particular (meth)acrylate monomer(s), and at least one vinyl ester of a $C_2$-$C_{18}$ carboxylic acid, such as vinyl acetate,
- A copolymer of (meth)acrylamide and one or more vinyl esters of a $C_2$-$C_{18}$ carboxylic acid, such as vinyl acetate, and optionally vinyl versatate (also known as Veova 10®),
- A copolymer of (meth)acrylamide and vinyl aromatic and diene monomers, such as styrene and butadiene.

For example, the film-forming polymer can be a copolymer of (meth)acrylamide, preferably a combination of acrylamide and methacrylamide, a $C_1$-$C_{10}$ alkyl (meth)acrylate, and styrene.

The film-forming polymer used in the compositions according to the present invention typically has a glass transition temperature ($T_g$) of less than, or equal to 60°C such as less than 50°C, preferably less than 30°C, such as less than 10°C or less than 0°C. The film-forming polymer can for example have a $T_g$ in the range from -50°C to +60°C, preferably between -40°C and +55°C, more preferably between -30°C and +40°C and most preferably between -20°C and +30°C. The glass transition temperature can be adjusted to be in any one of the afore-mentioned ranges by selecting the ethylenically unsaturated monomers used to prepare the film-forming polymer and their respective amounts accordingly. The glass transition temperature ($T_g$) can be determined by differential scanning calorimetry (DSC) according to the procedure described in detail in the example section below.

As previously mentioned, the film-forming polymer may in particular, without being limited thereto, be formed by polymerizing a monomer mixture comprising at least one amide of an ethylenically unsaturated acid and at least one further ethylenically unsaturated monomer, which can each be as described above, in an aqueous emulsion to form a latex. The emulsion polymerization is typically carried out in the presence of one or more surfactant (also referred to as emulsifying and/or dispersing agent) and/or at least one protective colloid. Furthermore, typically one or more than one initiator is present in the aqueous reaction medium for a generation of radical species, which start the polymerization reaction. Subsequent radical chain growth polymerization through consumption of the ethylenically unsaturated monomers then proceeds to yield a latex comprising dispersed particles of the film-forming polymer.

Initiators which can be used according to the present invention include watersoluble and/or oil-soluble initiators which are effective for the purposes of the emulsion polymerization. Representative initiators are well known in the technical area and include, for example: azo compounds such as, for example, AIBN, AMBN and cyanovaleric acid, inorganic peroxy compounds such as hydrogen peroxide, sodium, potassium and ammonium peroxydisulfate, peroxycarbonates and peroxyborates, as well as organic peroxy compounds such as alkyl hydroperoxides, dialkyl peroxides, acyl hydroperoxides, and diacyl peroxides, as well as esters such as tertiary butyl perbenzoate and combinations of inorganic and organic initiators.

The initiator is generally used in a sufficient amount to initiate the polymerization reaction at a desired rate. Typically, an amount of initiator of from 0.01 to 5%, preferably of from 0.01 to 4 %, by weight, based on the total weight of the monomers used for preparing the film-forming polymer, is sufficient. The amount of initiator is most preferably of from 0.01 to 2% by weight, based on the total weight of the monomers. The amount of initiator includes all values and subvalues there between, especially including 0.01, 0.1, 0.5, 1, 1.5, 2, 2.5, 3, 4 and 4.5% by weight, based on the total weight of the monomers.

The above mentioned inorganic and organic peroxy compounds may also be used alone in combination with

one or more suitable reducing agents as is well known in the art. Examples of such reducing agents which may be mentioned are sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, glucose, dextrose, sulfonic acid compounds such as sodium methane sulfonate, amine compounds such as dimethylaniline, polyethyleneimines and ascorbic acid or metal salts. Alternatively, or additionally use can be made of commercial mixtures of reducing agents, such a proprietary mixture like Bruggolite® FF6 or FF6M (supplied by Brüggemann Chemical). The quantity of the reducing agent used is typically in a range from 0.01 to 10 parts by weight per part by weight of the polymerization initiator.

Surfactants or emulsifiers which are suitable for stabilizing the latex particles include those conventional surface-active agents for polymerization processes. The surfactant(s) can be added to the aqueous phase and/or the monomer phase in the preparation of the film-forming polymer. The surfactants may be present at the start of the polymerization, or may be divided between the start of the polymerization and the delayed addition, or continuous addition of the monomers, or post finishing the monomer addition.

Surfactants that can be used according to the present invention include any type of surfactant conventionally used in the art and include anionic, nonionic, cationic, and amphoteric surfactants as well as mixtures and combinations thereof.

Exemplary non-ionic surfactants, which can be used according to the present invention comprise, without being limited thereto, alkoxylated alkylphenols, alkoxylated fatty acids, alkoxylated fatty alcohols (such as Rhodasurf™ B1), alkoxylated triglycerides, alkoxylated sorbitan esters, alkoxylated fatty amines, alkoxylated distyryrlphenols, alkoxylated tristyryrlphenols, di(1-phenylethyl)phenols, alkoxylated tri(1-phenylethyl)phenols, alkoxylated fatty acid esters of glycerol, fatty acid esters of sorbitol (such as those commerically available under the trademark Tween), alkyl polyglycosides and block copolymers of ethylene oxide (EO) and propylene oxide (PO) such as EO/PO diblock copolymers and EO/PO/EO triblockcopolymers. Herein the terms "fatty acid", "fatty amine" and "fatty alcohol" refer to an aliphatic acid-, amine or hydroxyfunctional compound having at least 6, typically at least 8 or at least 10 carbon atoms, such as up to 30 carbon atoms, typically up to 26 carbon atoms or up to 22 carbon atoms, respectively. Non-limiting examples of fatty acids include for instance stearic acid, palmitic acid, lauric acid and oleic acid. The alkoxylated sorbitan esters are cyclized esters of sorbitol and of a fatty acid. The alkoxylated triglycerides can be alkoxylated derivatives of triglycerides of vegetable or animal origin such as lard, tallow, groundnut oil, butter oil, cottonseed oil, linseed oil, olive oil, fish oil, palm oil, grape seed oil, soybean oil, castor oil, rapeseed oil, copra oil or coconut oil.

The alkoxylation can in particularly be achieved by means of ethylene oxide and/or propylene oxide such that "alkoxylated" can more specifically mean "ethoxylated" and/or "propoxylated" with respect to any of the above-mentioned "alkoxylated" compounds. The number of oxyethylene (OE) and/or oxypropylene (OP) units in these nonionic surfactants generally varies from 2 to 100. More particularly, the number of OE and/or OP units can be between 2 and 50, preferably between 10 and 50. Preferably the oxyalkylene units are oxyethylene units in the above-mentioned alkoxylated surfactant compounds.

The alkoxylated alkylphenols generally have one or two linear or branched alkyl groups having 4 to 12 carbon atoms. Mention may in particular be made, by way of example, of octyl, nonyl or dodecyl groups. Mention may in particular be made, as non-limiting examples of nonionic surfactants of the group of the alkoxylated alkylphenols to ethoxylated and/or propoxylated di(1-phenylethyl)phenols and ethoxylated and/or propoxylated tri(1-phenylethyl)phenols, such as di(1-phenylethyl)phenol ethoxylated with 5 OE units, di(1-phenylethyl)phenol ethoxylated with 10 OE units, tri(1-phenylethyl)phenol ethoxylated with 16 OE units, tri(1-phenylethyl)phenol ethoxylated with 20 OE units, tri(1-phenylethyl)phenol ethoxylated with 25 OE units, tri(1-phenylethyl)phenol ethoxylated with 40 OE units, tri(1-phenylethyl)phenols ethoxy-propoxylated with in total 25 OE and OP units, nonylphenol ethoxylated with 2 OE units, nonylphenol ethoxylated with 4 OE units, nonylphenol ethoxylated with 6 OE units, nonylphenol ethoxylated with 9 OE units, nonylphenols ethoxy-propoxylated with in total 25 OE and OP units, nonylphenols ethoxy-propoxylated with in total 30 OE and OP units, nonylphenols ethoxy-propoxylated with in total 40 OE and OP units, nonylphenols ethoxy-propoxylated with in total 55 OE and OP units, or nonylphenols ethoxy-propoxylated with in total 80 OE and OP units.

Non-limiting examples of suitable cationic surfactants include, but are not limited to, quaternized fatty amines.

Examples of anionic surfactants that can be used according to the present invention include, but are not limited to, alkoxylated sulphonates, sulphates, phosphates or phosphonates, alkyl sulfates, alkyl ether sulfates, aryl sulfonates, phosphates of ethoxylated alcohols, sulfosuccinates, sulfates and sulfonates of ethoxylated alkylphenols, and mixtures thereof. Suitable non-limiting examples include fatty alcohol (poly)ethersulfates, ether bearing fatty sulfates (such as Disponil™ FES77 IS) or alkyl phosphates, or hydrogenated or non-hydrogenated salts of abietic acid, alkylated diphenyl oxide disulfonates, sodium dodecylbenzenesulfonates and dihexyl esters of sodium sulfosuccinate and salts thereof. Alternatively, or additionally use may be made of so-called copolymerizable surfactants that are well known in the state of the art; examples of copolymerizable surfactants include, but are not limited to vinylsulfonic acid, allylsulfonic acid and methallylsulfonic acid, and salts thereof; aromatic sulfonic acids, such as, for example, p-styrenesulfonic acid, isopropenylbenzenesulfonic acid and vinyloxybenzenesulfonic acid and salts thereof; sulfoalkyl esters of acrylic acid

and methacrylic acid, such as, for example, sulfoethyl methacrylate and sulfopropyl methacrylate and salts thereof, and 2-acrylamido-2-methylpropanesulfonic acid and salts thereof. The counterion of the anionic surfactant in salt form is typically $K^+$, $Na^+$ or $NH_4^+$.

The type and the amount of the surfactant is governed typically by the number of particles, their size and their composition. In a seeded emulsion polymerization process an effective amount of surfactant can be chosen for supporting the stabilization of the particles as a colloid, the minimization of contact between the particles and the prevention of coagulation. In a non-seeded process, the amount of surfactant can in particular be chosen for controlling the particle size of the latex as desired. Typically, the surfactant is used in amounts of from 0 to 10 wt.%, preferably from 0 to 5 wt.%, more preferably from 0 to 3 wt.%, such as from 0.005 to 8 wt.%, from 0.01 to 5 wt.%, or from 0.05 to 3 wt.%, based on the total amount of the monomers. The amount of surfactant includes all values and sub-values there between, especially including 0 wt.%, 0.001 wt.%, 0.01 wt.%, 0.05 wt.%, 0.1 wt.%, 0.2 wt.%, 0.3 wt.%, 0.4 wt.%, 0.5 wt.%, 0.7 wt.%, 1 wt.%, 1.5 wt.%, 2 wt.%, 3 wt.%, 4 wt.%, 5 wt.%, 6 wt.%, 7 wt.%, 8 wt.%, 9 wt.% and 10 wt.%, based on the total amount of the monomers. According to one embodiment of the present invention, the polymerization is conducted without using surfactants.

Various protective colloids can also be used instead of or in addition to the surfactants described above. Suitable colloids include polyhydroxy compounds, such as partially acetylated polyvinyl alcohol, casein, hydroxyethyl starch, carboxymethylcellulose, hydroxyethylcellulose, hydroxypropylcellulose, degraded starch (also known as dextrins), polyethylene glycol and gum arabic. The preferred protective colloids are carboxymethylcellulose, hydroxyethylcellulose and hydroxypropylcellulose. In general, these protective colloids are used in contents of from 0 to 10 wt.%, preferably from 0 to 5 wt.%, more preferably from 0 to 2 wt.%, based on the total amount of the monomers. The amount of protective colloids includes all values and subvalues there between, especially including 1, 2, 3, 4, 5, 6, 7, 8 and 9 wt.%, based on the total amount of the monomers.

Other auxiliary agents frequently used in conventional emulsion polymerization processes can also be used in the preparation of the film-forming polymer according to the present invention depending on requirements. Such further auxiliary agents include, without being limited thereto, pH regulators, buffer substances, chelating agents, chain transfer agents and short stopping agents.

Suitable buffer substances are, for example, alkali metal phosphates and pyrophosphates, alkali metal carbonates and hydrogen carbonates, or alkali metal carboxylates such as sodium acetate. Suitable chelating agents can be exemplified alkali metal salts of ethylenediaminetetraacetic acid (EDTA) or hydroxyl-2-ethylenediaminetriacetic acid (HEEDTA). The quantity of buffer substances and chelating agents is usually 0.001-1.0 weight percent, based on the total amount of monomers.

A chain transfer agent can be used to control or adjust the length of the molecular chains of the polymer in the emulsion polymerization. Non-limiting examples of chain transfer agents (regulators) that can be used in the emulsion polymerization according to the present invention include organic sulfur compounds, such as thioesters, 2-mercaptoethanol, 3-mercaptopropionic acid and $C_1$-$C_{12}$ alkyl mercaptans, such as preferably n-dodecylmercaptan or t-dodecylmercaptan. Alternatively, or additionally, the chain transfer agent may comprise cyclohexene or a halogenated hydrocarbon, such as chloroform, bromoform and/or carbon tetrachloride. The quantity of chain transfer agents, if used, is usually in a range from 0.05 to 3.0 weight percent, preferably from 0.2 to 2.0 weight percent, based on the total weight of the monomers. The chain transfer agent, if used, can be added to the reaction mixture either before and/or during polymerization. In one embodiment of the present invention, the polymerization was carried out in the absence of added chain transfer agent.

The conditions for carrying out the emulsion polymerization of the ethylenically unsaturated monomers to form a latex of the film-forming polymer are not particularly limited and can be chosen in accordance with conventional emulsion polymerization conditions as described for example in Chemistry and Technology of Emulsion Polymerization, 2nd Edition, A. M. van Herk (Editor), ISBN: 978-1-119-95372-2; Emulsion Polymerization, A. van Herk, H. Heuts in Encyclopedia of Polymer Science and Technology, Online ISBN: 9780471440260, Emulsion Polymer Technology (Ed) Robert D. Athey, CRC Press, 1st March, 1991. Thus, the emulsion polymerization may for instance optionally be carried out in the presence of a seed latex, in particular when adjusting a certain particle size is desired. The emulsion polymerization is typically performed at a temperature from 0 to 130°C, preferably from 10 to 110°C, more preferably from 20 to 95°C, or from 30°C to 95°C. The temperature includes all values and sub-values there between, especially including 5, 10, 15, 20, 25, 30, 35, 40, 45, 50, 55, 60, 65, 70, 75, 80, 85, 90, 95, 100, 105, 110, 115, 120 and 125°C.

Monomers employed to prepare the film-forming polymer can be introduced to the reaction medium as a mixture or separately. The monomers may be added as a series of aliquots, or they may be added continuously in a procedure known in the stats of the art as continuous monomer addition, or delayed monomer addition. The monomers may or may not be pre-emulsified and may optionally be stored in the form of a pre-emulsion. Each monomer or mixture of a plurality of different monomers can each individually be added to the reaction mixture before the beginning of the polymerization and/or during the polymerization, either as a single portion, in successive fractions or continuously. The emulsion polymerization according to the present invention can accordingly be carried out for example with monomer

feed in batch, pseudobatch or continuous mode. As a characteristic feature, at least a portion of the at least one amide of an ethylenically unsaturated acid is however homopolymerized before addition of the least one further ethylenically unsaturated monomer to the reaction medium in the preparation of the film-forming polymer according to the present invention. The terms "homopolymerized", "homopolymerization" and the like as used herein mean a polymerization of monomers of the same type, in this case amides of an ethylenically unsaturated acid. It encompasses thus a polymerization of a single kind of amide of an ethylenically unsaturated acid as well as a polymerization of two or more different kinds of monomers each being an amide of an ethylenically unsaturated acid such as a mixture of acrylamide and (meth)acrylamide. For the sake of clarity, the "homopolymerization" is carried out in the absence of ethylenically unsaturated monomers, which are different from amides of an ethylenically unsaturated acid. In a preferred embodiment, acrylamide is homopolymerized before further ethylenically unsaturated monomers and optionally further monomer(s) being an amide of an ethylenically unsaturated acid, such as methacrylamide and/or further amounts of acrylamide, are added to the reaction medium in the preparation of the film-forming polymer.

Homopolymerizing at least a portion of the at least one amide of an ethylenically unsaturated acid before the addition of further ethylenically unsaturated monomers to the reaction medium in the preparation of the film-forming polymer has surprisingly been found to promote redispersibility of the finally formed polymer particles when used in combination with an aromatic acid according to Formula (I). Without wishing to be bound by any theory, the inventor believes that such homopolymerization leads to the formation of oligomeric or polymeric species derived from amides of an ethylenically unsaturated acid such as oligoacrylamide species, which will chemically be linked to and/or incorporated by the polymer particles formed in the course of the ensuing copolymerization of at least one amide of an ethylenically unsaturated acid and one or more further ethylencally unsaturated monomers. The presence of such linked or incorporated oligomeric or polymeric moieties derived from amides of an ethylenically unsaturated acid such as oligoacrylamide moieties in the polymer particles could enable an effective interaction with said aromatic acid compounds or salts thereof, e.g. by hydrogen bonding, and assist in dispersing the polymer particles in aqueous media.

The copolymerization of the different monomers employed for preparing the film-forming polymer is generally carried out under conditions as indicated above, until the desired conversion of monomers has been reached. The polymerization may then be terminated by addition of a "short stop" (or "short stopping") agent such as butane-2,3-dione, hydroquinone or its monomethyl derivative, hydroxylamine or its N-substituted derivative (such as isopropyl hydroxylamine, N,N-diethyl hydroxylamine).

The thus obtainable latex comprises the film-forming polymer in the form of particles dispersed in an aqueous medium. The polymer particles typically have an average particle size in a range from 70 nm to 3 μm, such as from 100 nm to 2.5 μm, or from 150 nm to 2 μm, preferably from 200 nm to 1 μm, more preferably from 300 to 600 nm. "Average particle size" of the polymer particles refers to the z-average particle size as measured using dynamic light scattering (DLS) as set forth in the example section below. The total solids content of the latex obtained by the emulsion polymerization prior to compounding, if any, is generally between 10 and 70% by weight, such as between 30 and 70% by weight, often between 35 and 65% by weight.

The pulverulent composition according to the present invention comprises in addition to the at least one film-forming polymer described above at least one aromatic acid according to Formula (I) or a salt thereof.

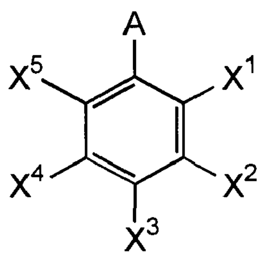

(I)

In Formula (I), group A comprises a carboxylic acid group or a sulfonic acid group. The carboxylic acid group or sulfonic acid group can be directly bound to the aromatic ring. In this case the group A represents a carboxylic acid group or a sulfonic group. Optionally the carboxylic acid group or a sulfonic group may also be separated from the aromatic ring by an organic spacer group, for example by one to four carbon atoms. The organic spacer group may for example comprise an alkylene group such as a $C_1$-$C_4$ alkylene group, or a heteroatom-containing derivative thereof such as an oxyalkylene group. In this case the group A may comprise an organic spacer group and a carboxylic acid group or a sulfonic acid group bound to the organic spacer group. Preferably, the group A is a carboxylic acid group or a sulfonic group.

The further substituents $X^1$ to $X^5$ of the aromatic ring of the acid according to Formula (I) are each independently selected from hydrogen, group A as defined above, group B comprising a hydroxyl or amino group, linear or branched

$C_1$-$C_{10}$ alkyl, which may optionally be substituted with one of more heteroatom-containing functional groups but are different from groups A or B, and $C_1$-$C_{10}$ alkoxy, under the proviso that at least one of $X^1$ to $X^5$ is group B. Accordingly, the aromatic acid of Formula (I) comprises at least one carboxylic acid group or sulfonic acid group and in addition at least one hydroxyl or amino group. The at least one hydroxyl or amino group can be directly bound to the aromatic ring. Thus, the group B can represent a hydroxyl group or an amino group. Optionally the hydroxyl group or amino group comprised by group B may also be separated from the aromatic ring by an organic spacer group, for example by one to four carbon atoms. The organic spacer group may for example comprise an alkylene group such as a $C_1$-$C_4$ alkylene group, or a heteroatom-containing derivative thereof such as an oxyalkylene group. Thus the group B may comprise an organic spacer group and a hydroxyl group or an amino group bound to the organic spacer group. Preferably, the group B is a hydroxyl group or an amino group.

The aromatic acid according to Formula (I) or salt thereof used according to the present invention may for example comprise an amino-functional aromatic sulfonic acid or a salt thereof, an amino-functional aromatic carboxylic acid or a salt thereof, an hydroxyl-functional aromatic carboxylic acid or a salt thereof, an hydroxyl-functional aromatic sulfonic acid or a salt thereof, or a combination of any of the foregoing.

Non-limiting examples of specific hydroxyl-functional aromatic carboxylic acids, which can be used according to the present invention, include salicylic acid (also known as 2-hydroxybenzoic acid), 2,6-dihydroxybenzoic acid, 3-methylsalicylic acid, 4-methylsalicylic acid, 2,6-dihydroxy-4-methyl-benzoic acid, 2-hydroxyterephthalic acid, 2,5-dihydroxyterephthalic acid, 4-hydroxybenzoic acid, 4-hydroxy-2-methylbenzoic acid, 2-hydroxy-3,5-dimethyl-benzoic acid, 2,4-dihydroxy-3-methylbenzoic acid, 2-hydroxy-3-isopropylbenzoic acid, 3,5-diisopropyl-2-hydroxybenzoic acid and salts thereof. The use of salicylic acid and salts thereof is preferred according to the present invention.

Non-limiting examples of specific amino-functional aromatic carboxylic acids, which can be used according to the present invention, include 2-aminobenzoic acid, 3-aminobenzoic acid, 4-aminobenzoic acid and salts thereof.

Non-limiting examples of specific amino-functional aromatic sulfonic acids, which can be used according to the present invention, include sulfanilic acid (also known as 4-aminobenzenesulfonic acid or aniline-4-sulfonic acid), 3-aminobenzenesulfonic acid (also known as metanilic acid), 4-aminotoluene-3-sulfonic acid (2-amino-5-methylbenzenesulfonic acid, 4-methylaniline-2-sulfonic acid), 6-aminotoluene-3-sulfonic acid, 4-amino-5-chloro-m-toluenesulfonic acid, 4-methylmetanilic acid, 5-amino-2,4-xylenesulfonic acid, 3,5-diamino-2,4,6-trimethylbenzenesulfonic acid, 4,4'-diamino-5,5'-dimethyl-2,2'-biphenyldisulfonic acid, 2,5-diaminobenzenesulfonic acid, 3-amino-4-hydroxybenzenesulfonic acid, 2,5-disulfoaniline, 2-amino-3,5-dimethylbenzenesulfonic acid, 4-hydrazinyl benzenesulfonic acid, 4-amino-2-methyl benzenesulfonic acid, 4-amino-3-hydroxy benzenesulfonic acid, 4-amino-2-hydroxy benzenesulfonic acid, 3,4-diamino benzenesulfonic acid, 4-[(hydroxymethyl)amino]- benzenesulfonic acid, 4-amino-3,5-dimethylbenzenesulfonic acid, 2,4-diaminobenzenesulfonic acid, 4-amino-3-chlorobenzenesulfonic acid, 4-amino-2-chlorobenzenesulfonic acid, 4-amino-3-iodobenzenesulfonic acid, 4-amino-3-fluorobenzenesulfonic acid, 4-amino-3-bromobenzenesulfonic acid, 4-amino-3-ethylbenzenesulfonic acid, 4-amino-2,5-dimethylbenzenesulfonic acid, 4-amino-2,3-dimethylbenzenesulfonic acid, 4-hydrazinyl-3-methylbenzenesulfonic acid, 3,4,5-triaminobenzenesulfonic acid, 4-amino-5-hydroxy-2-methylbenzenesulfonic acid, 4-amino-3-(1-methylethyl)benzenesulfonic acid, 3,4-diamino-5-methylbenzenesulfonic acid, 4-amino-2-hydroxy-5-methylbenzenesulfonic acid, 3-amino-4-(methylamino)benzenesulfonic acid, 2,4-diamino-5-methylbenzenesulfonic acid, 2-amino-4-(methylamino)benzenesulfonic acid, 4-amino-2-methoxybenzenesulfonic acid, 4-amino-3-methoxybenzenesulfonic acid, 3-amino-4-(methylamino)benzenesulfonic acid, 2,4-diamino-5-methylbenzenesulfonic acid, 2-amino-4-(methylamino)benzenesulfonic acid, 4-amino-2-methoxybenzenesulfonic acid, 4-amino-3-chloro-5-methylbenzenesulfonic acid, 4-hydrazinyl-3-hydroxybenzenesulfonic acid, 4-amino-2-chloro-6-methylbenzenesulfonic acid, 4-amino-3-bromo-5-methylbenzenesulfonic acid, 3-amino-4-hydrazinylbenzenesulfonic acid, 4-hydrazinyl-2-hydroxybenzene sulfonic acid and salts thereof. The use of sulfanilic acid, 3-amino-4-hydroxysulfonic acid, and salts thereof is preferred according to the present invention.

Non-limiting examples of specific hydroxyl-functional aromatic sulfonic acids, which can be used according to the present invention, include 4-amino-2-hydroxy benzenesulfonic acid, 3-amino-4-hydroxysulfonic acid, 4-[(hydroxymethyl)amino]-benzenesulfonic acid, 4-hydrazinyl-2-hydroxybenzene sulfonic acid, 4-hydroxybenzenesulfonic acid, phenolsulfonic acid, hydroquinonesulfonic acid and salts thereof. 4-hydroxybenzenesulfonic acid, phenolsulfonic acid, hydroquinonesulfonic acid and salts thereof can preferably be used according to the present invention.

Preferred aromatic acids, which can be used according to the present invention have a structure according to Formula (I), with group A representing a carboxylic acid group or a sulfonic acid group, one of $X^1$ to $X^5$ being group B representing a hydroxyl group or an amino group, and the remaining ones of $X^1$ to $X^5$ being hydrogen.

For example, an aromatic acid having a structure according to Formula (I) with group A representing a carboxylic acid group, one of $X^1$ to $X^5$ being group B representing a hydroxyl group, and the remaining ones of $X^1$ to $X^5$ being hydrogen, or a salt thereof can be used according to the present invention. An illustrative specific example of such hydroxyl-functional acid, which may preferably be employed according to the present invention, is salicylic acid (2-hydroxybenzoic acid) or salts thereof.

Alternatively or additionally, for example an aromatic acid having a structure according to Formula (I) with group

A representing a sulfonic acid group, one of $X^1$ to $X^5$ being group B representing an amino group, and the remaining ones of $X^1$ to $X^5$ being hydrogen or a salt thereof can be used according to the present invention. An illustrative specific example of such amino-functional acid, which may preferably be employed according to the present invention, is sulfanilic acid (4-aminobenzenesulfonic acid) or salts thereof.

The pulverulent composition according to the present invention can comprise a single aromatic acid of Formula (I) or salt thereof or a mixture or combination of two or more such aromatic acids or salts thereof. It is for example preferable according to the present invention to use a combination of at least two different aromatic acids (b1) and (b2) having a structure according to Formula (I), that may each also be present in the form of their salts, wherein in (b1) the group B represents a hydroxyl group and in (b2) the group B represents an amino group.

Typically, (b1) and (b2) are used in amounts corresponding to a weight ratio in the range from 1:10 to 10:1 such as 1:6 to 6:1. For example, (b1) can be an amino-functional aromatic sulfonic acid or a salt thereof, such as any amino-functional aromatic sulfonic acid or a salt thereof described above, and (b2) can be a hydroxyl-functional aromatic carboxylic acid or a salt thereof, such as any hydroxyl-functional aromatic carboxylic acid or a salt thereof described above. Particularly preferred is a combination of sulfanilic acid or a salt thereof and salicylic acid or a salt thereof. Surprisingly, it was found that a combination of two different aromatic acids (b1) and (b2) enhanced redispersibility of the pulverulent composition versus the use of either (b1) or (b2) singly and promotes stability of the dispersing characteristics of the powder over time. Without wishing to be bound by any theory, this effect is believed to arise from a mixture of the acid compounds or salts thereof preventing crystallisation of either compound. This crystallization, which may, or may not, occur when either component (b1) or (b2) are used individually prevents rapid re-solubilisation of said crystallites, and prolongs the time for redispersing the pulverulent composition.

As indicated previously, any of the aromatic acids according to Formula (I) can be used according to the present invention as such (i.e. as acid) and/or in the form of a salt of the acid. A salt of the acid can be formed by neutralizing the acid with a base. By adjusting the used equivalent amounts of the acid and the base it is possible to neutralize the acid to any desired degree such as partially or completely. Suitable bases, which can for example be employed to at least partially neutralize the aromatic acid and form thereby a salt include ammonia, basic metal hydroxides such as alkali or alkaline earth metal hydroxides such as sodium hydroxide, potassium hydroxide and calcium hydroxide, typically used in form of aqueous solutions. The at least one aromatic acid used according to the present invention, if present as a salt in the compositions according to the present invention, can in particular be a salt of a divalent metal, preferably an alkaline earth metal salt, more preferably a calcium salt.

The at least one aromatic acid according to Formula (I) or salt thereof is typically used in an amount of 0.5 wt.% or more, such as 1 wt.% or more, or 1.5 wt.% or more, or 2 wt.% or more, or 2.5 wt.% or more, or 3 wt.% or more, or 3.5 wt.% or more, or 4 wt.% or more, or 4.5 wt.% or more or 5 wt.% or more, based on the weight of the film-forming polymer. It can for example be used in an amount of up to 40 wt.%, such as up to 35 wt.%, up to 30 wt.%, up to 25 wt.%, up to 20 wt.%, up to 15 wt.%, or up to 10 wt.%, based on the weight of the film-forming polymer. A person skilled in the art will appreciate that any range between any of the explicitly disclosed lower and upper limit values is disclosed herein. For example, the at least one aromatic acid according to Formula (I) or salt thereof can be present in the pulverulent composition of the present invention in an amount in a range from 0.5 to 40 wt.%, such as 1 wt.% to 20 wt.%, or 3 wt.% to 10 wt.%, or 4 wt.% to 9 wt.%, or 5 wt.% to 8 wt.%, based on the weight of the film-forming polymer. The above weight percentages refer to the acid form irrespective of the form in which the compound according to Formula (I) is actually present in the pulverulent composition (e.g. as acid and/or salt thereof).

The pulverulent composition according to the present invention may optionally further comprise besides the film-forming polymer(s) and the at least one aromatic acid according to Formula (I) or salt thereof one or more surfactant.

The surfactant optionally comprised by the pulverulent composition can be any kind of anionic, cationic, non-ionic or amphoteric surfactant as mentioned above in the context of the emulsion polymerization. Preferably, the pulverulent composition according to the present invention comprises a non-ionic surfactant, particularly an alkoxylated non-ionic surfactant such as any one of the alkoxylated non-ionic surfactants mentioned previously. The pulverulent composition of the present invention can comprise a single surfactant or a combination of two or more surfactants. If used, the one or more surfactants are typically present in the pulverulent composition according to the present invention in an amount in a range from 0.5 to 10 wt.%, preferably from 1 to 9 wt.%, more preferably from 2 to 8 wt.%, or from 3 to 6 wt.%, based on total solid weight of the pulverulent composition.

The pulverulent composition according to the present invention may further comprise one or more inorganic filler. The use of an inorganic filler can facilitate the preparation of the powder and promote its stability on storage by preventing an aggregation of the powder, also referred to as caking. The inorganic filler, which may optionally be present in the pulverulent composition according to the present invention, is typically a particulate material. The inorganic filler may for example exhibit a sieved particle size of less than 100 μm, preferably less than 50 μm, more preferably less than 30 μm and most preferred less than 20 μm. Examples of suitable inorganic fillers, which may be used according to the present invention include, without being limited thereto, calcium carbonate, magnesium carbonate, calcined kaolin, metakaolin, barium sulphate, titanium oxide, talc, hydrated alumina, bentonite and calcium sulfoaluminate (satin white)

silica and mixtures or combinations thereof. If used, the one or more inorganic fillers are typically present in the pulverulent composition according to the present invention in an amount in a range from 0.5 to 20 wt.%, preferably from 5 to 15 wt.%, or from 7 to 13 wt.%, based on total solid weight of the pulverulent composition.

The pulverulent compositions according to the invention can optionally further comprise one or more additives depending on the needs of the specific targeted application. For example, the pulverulent composition according to the present invention may comprise one or more of additives selected from biocides, microbiostars, bacteriostatic agents, rheology modifiers, UV stabilizers, antioxidants, silicones, pigments, dyes, antifoaming agents, adjuvants that modify the rate of cure of the hydraulic compound and polymers different from the above-mentioned film-forming polymer. Such additives will generally be used in amounts conventionally used for the respective additive and application as known from the art. Typically such optional additives, if any, will be present in the pulverulent composition according to the present invention in a total amount of less than 20 wt.%, such as 0.1 to 10 wt.% or 0.5 to 5 wt.%, based on total solid weight of the pulverulent composition.

The pulverulent composition according to the present invention can be a powder. As such it may be composed of a plurality of flowable discrete solid particles. The flowable discrete solid particles may themselves be agglomerates of smaller primary particles as may be formed by methods known in the art, for example by agglomeration in a countercurrent spray drier. In the pulverulent composition according to the invention the size of the flowable discrete solid particles is generally less than 2.0 mm, less than 1.5 mm, less than 1.0 mm, preferably less than 750 μm and preferably less than 500 μm, such as in a range from 10 μm to 2.0 mm or 50 μm to 2.0 mm.

The pulverulent composition according to the present invention can for example be prepared from a latex of the film-forming polymer, which can be produced by polymerizing at least one amide of an ethylenically unsaturated acid and at least one further ethylenically unsaturated monomer in an aqueous emulsion as set forth above.

The at least one aromatic acid according to Formula (I) or a salt thereof and any optional ingredients such as the surfactant(s), the inorganic filler(s) and/or additives, if used, may be added to the aqueous medium before, during and/or after the polymerization in amounts as indicated above. Typically, at least some, or all of the at least one aromatic acid according to Formula (I) or a salt thereof and any optional ingredients such as the surfactant(s), the inorganic filler(s) and/or additives, if used, are added to the aqueous medium after the polymerization, i.e. to the formed latex.
Some or all of these ingredients may however also be added before or during the formation of the latex by emulsion polymerization. For example, in particular the at least one surfactant, if used in the pulverulent composition according to the present invention, can be added before or during the emulsion polymerization stage. Irrespective at which stage the at least one aromatic acid according to Formula (I) or a salt thereof and optional ingredients, if any, are added to the aqueous medium, a compounded latex is thus finally formed.

The at least one aromatic acid of Formula (I) or a salt thereof may preferably be added to the latex in solubilized form, e.g. as an aqueous solution. It was found that in order to optimize the use of certain aromatic acids of Formula (I) or their salts the pH of the aqueous medium should preferably be greater than 7.0 and more preferably greater than 8.5, such as in a range from 7 to 11, preferably from 8 to 10. The adjustment of the pH can be carried out by the addition of a suitable base such as lime, sodium hydroxide or ammonia. The use of lime is preferred.

Preparation of the pulverulent composition of the present invention may further comprise removing water from the latex such as in particular the compounded latex. By removing the water from the dispersion a powder can be obtained. For example, a variety of different drying methods known from the prior art can be used to remove the water from the latex for forming the pulverulent composition according to the present invention. Non-limiting examples of such drying process include freeze-drying, microwave drying, drying by means of a dehydration reaction, for example using concentrated solutions of salts, vacuum or near-vacuum drying or drying by atomization (also referred to as spray drying). Alternatively the water can for example be removed by coagulating the compounded latex of this invention, for example by adding an aqueous solution of a coagulant such as inorganic salt or acid to the compounded latex, and subsequent separation of the coagulated matter from the liquid phase, for example by filtration. According to the present invention the water is preferably removed from the latex by spray drying as it enables to directly obtain a powder with desired particle size characteristics without the need subsequent processing steps. Spray drying can be carried out in any manner practiced in the art using conventional equipment, such as, for example, an atomizing tower combining a nozzle or turbine spraying with a stream of hot gas, and may or may not comprise an inert atmosphere, such as a nitrogen atmosphere, or a so called low oxygen atmosphere, in which some or all of the oxygen has been combusted. The inlet temperature of the hot gas, typically air, at the column top, is preferably between 100 and 150°C and the outlet temperature is preferably between 55 and 90°C.

Whilst it is possible, as set forth above, that the optional inorganic filler, if used, is incorporated into the latex, which is subjected to water removal, preferably all or part of the inorganic filler is introduced during the water removal stage such as during spray drying. It is also possible to add the inorganic filler directly to the final pulverulent composition. Such addition during or after water removal is in principle also likewise possible for other components that may be used in the pulverulent compositions according to the present invention as mentioned above.

The moisture content in the dried material obtained after the water removal step is typically 2 wt.% or less such

as 1.0 wt.% or less, based on the total weight of the obtained pulverulent composition. The moisture content can be determined as set forth below in the experimental section.

If desired, the pulverulent composition obtained by the removal of water can optionally further be subjected to milling to achieve a desired particle size. Alternatively, the typically fine powder obtained after water removal can be granulated to generate a coarser form. A coarser form may be preferable for some applications for example due to an associated reduced tendency of dust formation and/or a more convenient and less-hazardous handling. Granulation can be performed for example within the chamber of the spray dryer, for example using counter-current feeding, or using a post-atomization fluid bed.

The pulverulent compositions according to the present invention are water-dispersible. This means that they can be dispersed in water forming a reconstituted latex. In the majority of cases, the pulverulent compositions according to the present invention are completely redispersible in water at ambient temperature (23°C) by simple stirring. The term "completely redispersible" as used herein means that a latex-based pulverulent composition can be dispersed in an appropriate amount of water to yield a reconstituted latex in which the average size of the dispersed polymer particles is substantially identical to the average size of the polymer particles in the initial latex used for preparing the pulverulent composition present, as obtained after emulsion polymerization. The term "substantially identical" as used herein can mean that the average particle size of the reconstituted latex differs by less than 20%, preferably less than 10% or less than 5% from the average particle size of the corresponding initial latex.

The pulverulent compositions according to the present invention are stable on storage, and remain redispersible after storage for several days. They can be used directly, e.g. in the form of a powder or granulate, or be premixed with a liquid carrier medium such as water to form a reconstituted latex.

The present invention therefore also relates to a film-forming composition comprising at least one film-forming polymer as defined above with respect to the pulverulent composition of the present invention, at least one aromatic acid of Formula (I) or a salt thereof as defined above and a liquid carrier medium. The at least one film-forming polymer is typically dispersed in the liquid carrier medium. The liquid carrier medium can in particular be an aqueous medium. The term "aqueous medium" as used herein refers to a medium, which comprises more than 30 wt.% water, such as at least 45 wt.%, or at least 60 wt.%, or at least 70 wt.%, or at least 80 wt.%, or at least 85 wt.%, or at least 90 wt.%, or at least 95 wt.% water. The aqueous medium can for example be water or a mixture of water and one or more organic solvents, typically polar organic solvents such as alcohols like ethanol, isopropanol, or butanol or esters such as ethyl acetate and the like.

The film-forming composition according to the present invention can for example be obtained by redispersing a pulverulent composition of the present invention in the liquid carrier medium such as water, thus corresponding to a reconsituted latex. Alternatively, it may correspond to a compounded latex useful for forming the pulverulent composition of the present invention as described above, i.e. a latex used for forming the pulverulent composition of the present invention before the removal of water. Therefore, the film-forming composition may comprise any of the components described above with respect to the pulverulent composition of the present invention including any possible features/variants thereof, and in corresponding amounts to those indicated for the pulverulent composition.

The film-forming polymer may for example be present in both the pulverulent composition of the present invention as well as in the film-forming composition of the present invention in the form of particles having an average particle size from 70 nm to 3 μm such as from 100 nm to 2.5 μm, or from 150 nm to 2 μm, preferably from 200 nm to 1 μm, more preferably from 300 to 600 nm. from 70 nm to 3 μm, such as from 100 nm to 2.5 μm, or from 150 nm to 2 μm, preferably from 200 nm to 1 μm, more preferably from 300 to 600 nm.

The pulverulent compositions of the present invention and the film-forming compositions of the present invention are useful in a variety of different fields. They can in particular be used as an adjuvant to a mineral binder, e.g. to enhance the performance of a construction material. For example, use of a composition according to the present invention as adjuvant to a mineral binder in the formulation of a construction material can reduce the tendency to crack formation, provide good adhesion to various supports, improve impact and/or abrasion strength, flexural and/or compressive strength, water penetration resistance and/or flexibility. Accordingly the present invention also relates to a construction material comprising the water-dispersible pulverulent composition or the film-forming composition according to the present invention and a mineral binder. The mineral binder can in particular be a hydraulically setting material such as cement. The water-dispersible pulverulent composition or the film-forming composition according to the present invention may for example be used in grouts, mortars, adhesives, cement compositions, concrete or coating compositions. Applications lie for instance in the building, civil engineering or oil industry, for example tile bonding cements, pressure-sensitive adhesives, tiling adhesives, smoothing and finishing coatings, adhesives and coatings for insulating complexes, repair mortars, leak tight coatings and grouts for the cementation of oil wells. The pulverulent compositions of the present invention and the film-forming compositions of the present invention are particularly useful for the production of flexible waterproof membranes. Thus, mortar formulations comprising such composition of the present invention were found to comply with the pertinent requirements according to EN 14891-2012. The compositions according to the present invention may furthermore be used for the production of sacrificial coatings such as temporary coatings for control of graffiti.

Furthermore, the compositions of the present invention can find use in other fields of application typical of latexes, such as in the field of paints, compositions for the coating of paper and in adhesives. Moreover, use of the compositions of the present invention as coatings, binders or control release agent in agrochemical formulations, as additive in oilfield applications e.g. as rheology modifier or for gas block applications, as well as an additive in the production of carpets is foreseen.

The present invention will further be illustrated with reference to the following examples, which are intended to promote an understanding of the present invention and are not to be construed as limiting the scope of the present invention, which is rather to be given the full breadth of the appended claims.

EXAMPLES:

Example 1: Preparation of a butyl acrylate-styrene-(meth)acrylamide copolymer latex

An aqueous monomer pre-emulsion was prepared by combining in a vessel under agitation 1689.57 g of n-butyl acrylate, 756.52 g of styrene, 75.65 g of methacrylamide, 53.91 g of an aqueous solution of a sodium laurylether sulfate (Disponil® FES77 IS (33% w/w, supplied by BASF corporation)), and 78.61 g of water.

560.88 g of deionised water was charged to a 5 litre glass reactor, equipped with a stainless steel anchor agitator, together with 21.56 g of an aqueous solution of an ethoxylated fatty alcohol, Rhodasurf® B1 (25% w/w, supplied by Solvay), 3.74 g of an aqueous solution of Disponil® FES77 IS (33% w/w), 2.00 g of an aqueous solution of formic acid (85% w/w) and 7.57 g of sodium bicarbonate. The mixture was then heated to 87°C, with agitation. To this mixture was then added 49.57 g of an aqueous solution of acrylamide (30 wt.%) and the resultant mixture was kept at 87°C for 5 minutes . HPLC analysis of an aliquot taken from this mixture 5 minutes after introduction of the acrylamide solution, showed that the acrylamide concentration decreased from the initial theoretical concentration of about 2.3 wt.% to about 0.7 wt.%. The HPLC analysis method used is explained in more detail below.

After the 5 minutes hold at 87°C, 115.65 g of the above-described aqueous monomer pre-emulsion were added to the mixture. 5 minutes after this addition the remainder of the aqueous monomer pre-emulsion was added dropwise to the mixture over 3 hours, wherein during the first 30 minutes the temperature is kept at 87°C and then increased to 90°C for the rest of the polymerization. Simultaneously with the dropwise addition of the aqueous monomer pre-emulsion an aqueous solution of 14.26 g of sodium peroxodisulfate in 197.39 g of water (solution (A)) was added dropwise to the mixture over 4 hours.

The reaction mixture was subsequently agitated at 90°C for a further 10 minutes after the addition of solution (A), before it was cooled to 80°C. 44.0 g of an aqueous solution of tert-butyl hydroperoxide (TBHP) (solution (B)) was added as an aliquot 5 minutes after the addition of solution (A), and 145.0 g of an aqueous solution of erythorbic acid (solution (C)) was added to the agitated reactor contents over 30 minutes, whilst maintaining the batch at 80°C. The reaction mixture was then cooled to 50°C, and neutralized to a pH of approximately 6.0 - 7.0 by addition of an aqueous solution of sodium hydroxide (3% w/w).
The resultant emulsion was then filtered through a 200 μm sieve.
The thus obtained emulsion exhibited the following characteristics:

| | |
|---|---|
| average particle size: | 380 nm, |
| total solids content: | 58.5 wt.% |
| viscosity: | 336 mPa·s, |
| pH: | 6.6 |
| $T_{g\ midpoint}$: | -3 ± 2°C. |

The total solids content (TSC) of the latex was determined by a gravimetric method as follows: 1 - 2 g of the emulsion were weighed on an analysis balance into a tarred aluminum dish. The dish was then stored for 70 minutes at 110° C in a circulating air oven (it was verified that after such exposure a constant mass was reached). After cooling to room temperature the final weight is determined again. The total solids content was calculated as follows:

$$TSC = \frac{m_{initial} - m_{final}}{m_{initial}} 100\ \% \quad m_{initial} = \text{initial weight},\ m_{final} = \text{weight after drying}$$

The pH value of the latex was determined with a pH meter, Metrohm 827 pH lab. After 2 point calibration with

buffer solutions, the electrode (Metrohm 6.0228.010) of the pH meter was immersed in the dispersion at 23° C and the constant value on the display was recorded as pH value.

The viscosity of the latex was determined at 23°C with a Brookfield DV-I viscometer. Approximately 220 ml of the liquid (freed of air bubbles) was filled into a 250 ml beaker and the spindle of the viscometer was immersed up to the mark. The viscometer was then switch on and after approximately 3 minutes the value is recorded until it is constant. The viscosity was recorded at a fixed speed of 50 rpm. The spindle was chosen such that the actual viscosity measured fell within the measurement range recommended for the spindle, typically being a No.2 or No.3 spindle. The viscosity value being directly read-off of the instrument.

The average particle size of the latex was determined as z-average particle size as measured with a Malvern Zetasizer Nano S90, or alternatively with a Malvern Mastersizer 2000 instrument, using dynamic light scattering. The latex sample was diluted with deionized water to the turbidity level described in the manual and transferred in the test cuvette. The cuvette was gently mixed to make the sample homogeneous and the cuvette was placed in the measurement device. The instrument software directly provided the z-average particle size of the measured particle size distribution. The determination was conducted using the "general purpose" analysis model using a refractive index of 1.47 or 1.49 for the measurements with the Malvern Mastersizer 2000 or the Malvern zetasizer nano S90 instrument, respectively.

The glass transition temperature $T_g$ of the latex was determined according to the following procedure:

A film of the latex was cast onto a clean glass plate using a bar film applicator with a gap size of 150 μm, and dried in an air conditioned room (23°C) for 24 hours, followed by 2 hours in an air circulating oven set at 50°C. A piece of the dried polymer film corresponding to a weight of 5 to 20 mg was then removed from the glass plate and weighed into an aluminum capsule for differential scanning calorimetry (DSC) analysis using a Mettler DSC823 instrument. The measurement was carried out versus an empty reference aluminum capsule under nitrogen applying the following temperature profile:

The sample was cooled to -80°C at a rate of 20°C / minute and then held at -80°C for 2 minutes. Subsequently, the sample was heated from -80°C to 120°C at a rate of 20°C / minute. Thereafter the sample was cooled from 120°C back to -80°C at a rate of 20°C / minute. The sample was then held at -80°C for 2 minutes and subsequently heated once more from -80°C to 120°C at a rate of 20°C / minute.

From the measured heat flow versus temperature curves of the second heating period the glass transition temperature was determined employing the "Glass transition" routine of the instrument manufacturer software, which uses the tangent line method. The reported $T_{g\ midpoint}$ value represents the mean glass transition temperature as determined by the tangent method.

The acrylamide content of the latex was determined by HPLC in accordance with the following method:

An amount of about 1 g of the latex sample to be analyzed is weighed into a 22 mL snap vial recording the precise sample weight and subsequently diluted with 10 mL of water. Thereafter, 10 mL of an aqueous $Al_2(SO_4)_3$ solution, which has been prepared by dissolving 1 g $Al_2(SO_4)_3$ in 100 mL of distilled water, is added to the mixture for destabilization. The resulting mixture is left to mix on a shaker for 1 hour. The resulting dispersion may then be centrifuged in a test tube at 6,000 rpm to effect separation. The supernatant is then filtered through a 0.45 μm syringe filter into a 2 ml vial and an aliquot of 10 μL injected via the autosampler into a Shimadzu HPLC instrument (Prominence UFLC) equipped with a UV detector for HPLC analysis applying the following settings:

Column : Synergi 4u Hydro-RP 80A 250 x 4.6mm

UV Detector Wavelength : 205 nm

Mobile phase : Acetonitrile: Water (5:95)

Flow: 0.5 mL/min

Temperature : 30 °C

Run time : 20 mins

Acrylamide, retention time: 8:37 mins

Back pressure: 1020 psi.

For calibration a series of standard acrylamide samples were used. The standards were prepared by diluting an acrylamide stock solution, which was prepared by weighing 0.05 g of acrylamide solid into a 100 mL volumetric flask and filling to

mark with analytical water, to yield concentrations of 150 ppm, 100 ppm, 50 ppm, 20 ppm, 5 ppm and 0.5 ppm of acrylamide.
The concentration of acrylamide in the analyzed sample was calculated from the peak area of the acrylamide peak in the recorded chromatogram making use of a respective calibration curve obtained by the calibration with the above-mentioned standards and is calculated according to:

Concentration of acrylamide in sample (ppm)

= Acrylamide concentration (ppm) corresponding to measured peak area according to calibration curve x Dilution Factor x 0.9.

The dilution factor takes into account the dilution of the initial latex sample to be analyzed for preparation of the sample subjected to HPLC analysis. The factor of 0.9 relates to a 90% recovery of acrylamide.

Example 2 (Comparative Example): Preparation of an acrylic-styrene copolymer latex

820.00 g of deionised water were added to a 5 litre glass reactor equipped with a stainless steel anchor agitator, together with 14.00 g of sodium pyrophosphate, 12.83 g of sodium hydrogen carbonate, 6.02 g of an aqueous solution of a sodium $C_9$-$C_{22}$ alkyl sec sulfonate (Emulgator K30 (30% w/w, supplied by Solvay)), 1.82 g of a hydrodispersible polyester (Geropon® 9700 (30% w/w, supplied by Rhodia) and 21.20 g of methallylsulfonate (supplied by Copci).
To this mixture, agitated at 100 rpm and maintained at room temperature, was then added a monomer blend consisting of 75.60 g of acrylic acid, 10.10 g of lauryl mercaptan, 155.71 g of styrene and 154.73 g of butyl acrylate. 12.72 g of an aqueous solution of sodium persulfate (17% w/w) was then added to the reactor and the mixture was then heated to 80°C over 65 minutes. Once the temperature of the mixture had reached 76°C, a monomer mixture consisting of 1287.5 g of n-butyl acrylate and 428.3 g of styrene was added dropwise over a 5 hour time period, whilst maintaining the reactor contents at 80°C. Simultaneously, an aqueous solution (X) consisting of 12.5 g of sodium peroxodisulfate, 0.94 g of a surfactant (Simulsol 546N supplied by Seppic), and 920.0 g of deionised water was introduced dropwise to the reactor over a 7 hour time period. Once the monomer addition had finished after 5 hours, the temperature of the reactor contents was raised to 90°C, over 30 minutes, and maintained at this temperature until the completion of the addition of solution (X). Following completion of the addition of solution (X), the batch temperature was maintained at 90°C for 85 minutes, under agitation. Then, the reaction mixture was cooled down to room temperature.
The resultant emulsion was then filtered through a 200 μm sieve.
The z-average particle size, total solids content, pH, glass transition temperature and viscosity of the thus obtained emulsion were determined as set forth above for Example 1. The emulsion exhibited the following characteristics:

| | |
|---|---|
| Average particle size | 350 nm |
| Total solids content: | 55.4 wt.% |
| Viscosity | 293 mPa·s, |
| pH | 5.0 |
| $T_{g\ midpoint}$ | -5 ± 2°C |

Example 3: Preparation of a compounded latex according to the invention using an aqueous solution of sulfanilic acid

A stock solution, S1, was prepared as follows: To a beaker containing 10 g of demineralized water was added 10 g sulfanilic acid, and 8.4 g of a 26 wt.% aqueous solution of lime (Alkodit 26HR from Lhoist) was then added under agitation, to generate a solution that was free of suspended matter.
The latex according to Example 1 was compounded with different amounts of this stock solution. To 100 parts by weight of the emulsion of Example 1 was added under agitation 1.66 parts by weight of solution S1 to thereby yield a compounded latex having a concentration of 1 wt.% of sulfanilic acid (calculated as sulfanilic acid, irrespective of the form in which the compound is actually present), with respect to the total solid content of the emulsion thereby yielding a compounded latex 3-1.
This procedure was repeated adding the stock solution S-1 to samples of the latex of Example 1 in greater amounts yielding concentrations of a) 2 wt.% by adding 3.32 parts by weight of solution S1 to 100 parts by weight of latex of example 1 (compounded latex 3-2), b) 3 wt.% by adding 4.98 parts by weight of solution S1 to 100 parts by weight of latex of example 1 (compounded latex 3-3), and c) 4 wt.% by adding 6.64 parts by weight of solution S1 into

100 parts by weight of latex of example 1 (compounded latex 3-4), respectively, of sulfanilic acid (calculated as sulfanilic acid, irrespective of the form in which the compound is present in S1), with weight percentages based on the total solids content of the emulsion.

The redispersing capabilities of films derived from the thus prepared compounded latexes were investigated. For this purpose the respective compounded latex was applied upon a glass slide using a bar film applicator with a gap size of 150 μm, and the thus obtained coated substrate dried for 20 minutes at 50°C in an air-circulating oven and then allowed to cool to room temperature. The thus obtained dried film had a thickness of approximately 75 μm. A water droplet was then placed upon the film and the redispersibility of the film material in the water droplet upon gentle rubbing with a finger evaluated visually. This redispersibility test yielded the following observations as summarized in Table 1.

Table 1:

| Compounded latex | Quantity of sulfanilic acid [wt. %] | Observation |
|---|---|---|
| 3-1 | 1 | Film not completely redispersible |
| 3-2 | 2 | Whitening of the film, and complete redispersion by rubbing |
| 3-3 | 3 | Whitening of the film, and complete redispersion by rubbing |
| 3-4 | 4 | Whitening of the film, and complete redispersion by rubbing |

In addition all of the films were non-sticky at room temperature.

Compounded latexes were also prepared in the same manner as set forth above from samples of the latex of Example 1 using an aqueous stock solution S2 of sulfanilic acid and sodium hydroxide in place of the aqueous stock solution S1 containing sulfanilic acid and lime. The stock solution S2 was prepared by adding to a beaker containing 10 g of demineralized water 4.6 g of a 50 wt.% aqueous solution of sodium hydroxide followed by 10 g sulfanilic acid, under agitation, to generate a solution that was free of suspended matter. Films derived from the compounded latexes prepared using stock solution S2 were prepared in the same manner as described above. They were found to be stickier than the films derived from compounded latexes 3-1 to 3-4 in the above redispersibility test.

Preparation of compounded latex compositions for the preparation of pulverulent compositions

Example 4: Preparation of a compounded latex of this invention using an aqueous solution of sulfanilic acid

To 100 parts by weight of the emulsion of Example 1 was added under agitation an aqueous solution composed of 5 parts by weight of sulfanilic acid, 13.3 parts by weight of water and 3.95 parts by weight of lime Alkodit 26HR from Lhoist to thereby yield a compounded latex having a concentration of 8.6 wt.% of sulfanilic acid (calculated as sulfanilic acid, irrespective of the form in which the compound is actually present), with respect to the total solid content of the emulsion.

Example 5 (Comparative Example): Preparation of a compounded comparative emulsion (in accordance with US patent no. 6,391,952)

To 100 parts by weight of a sample of the emulsion of Example 1 was added under agitation 5.8 parts by weight of 4-amino naphthalenesulfonic acid sodium salt (97% pure solid, supplied by Sigma-Aldrich) yielding a concentration of 10 wt.% of the 4-amino naphthalenesulfonic acid sodium salt with respect to the total solid content of the emulsion, to thereby yield a compounded latex.

Example 6 (Comparative Example): Preparation of a compounded comparative emulsion (in accordance with US patent no. 6,080,806)

To 100 parts by weight of a sample of the emulsion of Example 2 was added under agitation 5.3 parts by weight mono sodium glutamate (>98% purity, supplied by Prolabo), yielding a concentration of 9.5 wt.% of the mono sodium glutamate, with respect to the total solid content of the emulsion, to thereby yield a compounded latex.

Example 7 (Comparative Example): Preparation of a further compounded comparative emulsion (in accordance with US patent no. 6,080,806)

This was a repeat of Comparative Example 6, except that the mono sodium glutamate was added to the latex in an amount yielding a concentration of 6.0 wt.% of mono sodium glutamate, as solid, with respect to the total solid content of the emulsion.

Example 8: Preparation of a compounded latex of this invention using an aqueous solution of sulfanilic acid and salicylic acid

A stock solution, S3, was prepared as follows: To a beaker containing 100 parts by weight of demineralized water were added 25 parts by weight sulfanilic acid, 6.2 parts by weight salicylic acid and 27 parts by weight of a 26 wt.% aqueous solution of lime (Alkodit 26HR from Lhoist) under agitation, to generate a solution that was free of suspended matter.

To 100 parts by weight of the emulsion of Example 1 was added under agitation 14.8 parts by weight of the afore-mentioned stock solution S3, to thereby yield a compounded latex having a concentration of 4.0 wt.% of sulfanilic acid and 1.0 wt.% of salicylic acid (calculated as sulfanilic acid or salicylic acid, respectively, irrespective of the form in which the compounds are present in S3) with respect to the total solid content of the emulsion.

Preparation of pulverulent compositions from the compounded latex compositions of Examples 4-8

Example 9: Preparation of a spray dried pulverulent composition of this invention from the compounded latex of Example 4

The dispersion of Example 4 was converted into a powder by spray drying. The drying was carried out in an approximately 2 m tall pilot scale atomizing tower (supplied by Niro Atomizer) equipped with an atomizer wheel, the inlet temperature of the inlet hot air was 120°C, and the outlet temperature was 80°C. During the atomization, calcined kaolin particles (Metasial VSZ, supplied by Soka) were introduced into the spray drier in an amount such that the final pulverulent composition, obtained at the outlet of the spray drier had a content of calcined kaolin of approximately 10 wt.% based on total solids.

The resultant powder had the following characteristics:

| | |
|---|---|
| TSC: | 99.7 wt.% |
| Content of anticaking agent: | 12.6 wt.% |
| Average particle diameter: | 40 μm |

The average particle diameter was measured using a Malvern Mastersizer 2000 fitted with a Malvern SCIROCCO 2000 dry powder feeder in accordance with the manufacturer's instructions.

The total solids content of the spray dried pulverulent composition was determined as follows: A crucible was accurately weighed. The weight of the crucible was noted as $m_0$. Then, approximately 1 g of the pulverulent composition was accurately weighed into the crucible. The determined weight of the pulverulent composition was noted as $m_1$. The crucible containing the weighed amount of the pulverulent composition was then placed in an oven set at a temperature of 105°C for a period of 2 hours. The crucible was then removed from the oven and allowed to cool to room temperature in a desiccator. The cooled crucible containing the pulverulent composition was then weighed again and the determined mass noted as $m_2$. The total solids content (TSC) of the pulverulent composition was then calculated as:

$$\text{TSC (wt.\%)} = ((m_2 - m_0) / m_1) \times 100$$

For determination of the organic content of the spray dried pulverulent composition the crucible with the pulverulent composition dried as set forth above, having weight $m_2$, was placed in an oven set at a temperature of 450°C for a period of 2 hours. The crucible was then removed from the oven and allowed to cool to room temperature in a desiccator. The cooled crucible containing the pulverulent composition was then weighed again and the determined mass noted as $m_3$. The organic content of the pulverulent composition was then calculated as:

$$\text{Organic content (wt.\%)} = ((m_2 - m_3) / m_1) \times 100$$

The reported anti-caking agent content was then calculated from the determined moisture content and organic content according to:

$$\text{Anti-Caking agent content [wt.\%]} = ((m_3 - m_0) / m_1) \times 100$$

Example 10 (Comparative Example): Preparation of a comparative spray dried powder composition from the compounded latex of Example 5

A spray dried pulverulent composition was prepared following the procedure set forth above with respect to Example 9, except that the compounded latex of Example 5 was used in place of the latex of Example 4. The obtained spray dried powder composition exhibited the following characteristics, which were determined according to the methods described above with respect to Example 9:

| | |
|---|---|
| TSC: | 99.6 wt.% |
| Content of anticaking agent | 10.5 wt.% |
| Average particle diameter: | 40 μm. |

Example 11 (Comparative Example): Preparation of a comparative spray dried powder composition from the compounded latex of Example 6

A spray dried pulverulent composition was prepared following the procedure set forth above with respect to Example 9, except that the compounded latex of Example 6 was used in place of the latex of Example 4.

Example 12 (Comparative Example): Preparation of a comparative spray dried powder composition from the compounded latex of Example 7

A spray dried pulverulent composition was prepared following the procedure set forth above with respect to Example 9, except that the compounded latex of Example 7 was used in place of the latex of Example 4. The obtained spray dried powder composition exhibited the following characteristics, which were determined according to the methods described above with respect to Example 9:

| | |
|---|---|
| TSC: | 99.2 wt.% |
| Anticaking agent: | 12.4 wt.% |
| Average particle diameter: | 55 μm |

Example 13: Preparation of a spray dried pulverulent powder composition of this invention from the compounded latex of Example 8

A spray dried pulverulent composition was prepared following the procedure set forth above with respect to Example 9, except that the compounded latex of Example 8 was used in place of the latex of Example 4. The obtained spray dried powder composition exhibited the following characteristics, which were determined according to the methods described above with respect to Example 9:

| | |
|---|---|
| TSC: | 99.6 wt.% |
| Anticaking agent: | 10.8 wt.% |
| Average particle diameter: | 54 μm |

Redispersibility of the prepared spray dried pulverulent compositions according to Examples 9-13 in water was investigated. For this purpose 25 g of the respective spray dried pulverulent composition were added to a beaker containing 25 g of water under vigorous mechanical agitation using a mixer (VMI Rayneri) set at 1,750 rpm at room temperature. The mixture was then further agitated in this manner for 15 minutes.

The particle size distribution and the average particle size of the reconstituted latexes thus obtained by redispersion of the spray dried pulverulent compositions was then determined according to the measurement method described above with respect to Example 1. The redispersibility was assessed by comparing the particle size distribution of the redispersed powder compared to the particle size distribution of the initial latex used for preparing the respective

spray dried pulverulent composition. An overlap of both particle size distributions was considered to indicate good redispersibility. Moreover, the color of the spray dried pulverulent compositions was evaluated visually after storage for one month at room temperature in a closed container without previous air degassing.

The results of these tests are summarized in Table 2.

Table 2:

| Example | Modifying agent(s) (MA (s)) | MA(s) concentration in wt.% with respect to the total solid content of the emulsion | Redispersible? | Average particle size | Color of the powder after 1 month |
|---|---|---|---|---|---|
| 9 | 4-aminobenzene sulfonic acid and/or salt thereof | 8.6 | Yes | ~ 400 nm | Yellow |
| 10 (Comparative Example) | 4-aminonaphthalene sulfonic acid, $Na^+$ salt | 10.0 | Yes | ~ 400 nm | Pink |
| 11 (Comparative Example) | Sodium glutamate | 9.5 | Yes | ~ 250 nm | White |
| 12 (Comparative Example) | Sodium glutamate | 6.0 | Yes | ~ 250 nm | White |
| 13 | 4-aminobenzene sulfonic acid and/or salt thereof / salicylic acid and/or salt thereof | 4.0 / 1.0 | Yes | ~ 400 nm | Yellow |

It was observed that the spray dried powders according to Examples 9 to 13 were each rapidly redispersed water, and it was observed that the mean particle size of the redispersed emulsion was similar to that of the particles of the starting latex.

Furthermore, the redispersibility of the spray dried pulverulent composition of Example 13 and its storage stability were investigated as follows by measuring the particle size distribution obtained after redispersion of the powder in water. 25g of the pulverulent composition of Example 13 as obtained immediately after spray drying was introduced slowly under vigorous mechanical agitation using a mixer (VMI Rayneri) set at 1,750 rpm in a beaker containing 25 g of water at room temperature. The system was kept under agitation for 15 minutes. After 15 minutes, the thus obtained reconstituted latex was analyzed using the Malvern Zetasizer NanoS90 instrument, in the 'classical' mode setting of the software provided by Malvern, diluting the latex in order to get a count rate between 200 and 300 KcPs. The same dilution was applied to the compounded latex according to Example 8, which was measured in the same manner as a reference. Figure 1 shows the measured particle size distribution curves.

It can be seen from Figure 1 that the two distribution curves are almost overlapping, with the average particle size of the initial compounded latex being no less than 80% of the average particle size of the reconstituted latex obtained from the spray dried pulverulent composition derived from this compounded latex.

Furthermore, approximately 40 mg of the spray dried pulverulent composition of Example 13 was directly introduced into the Malvern Mastersizer 2000 water tank with a maximum of stirring, a maximum of pump running and a maximum of ultrasound. A measurement of the particle size distribution was carried out immediately, and then repeated every 45 s, until the distribution stabilised (typically after 5 scans). This operation was carried out on the freshly spray dried powder, and then repeated again 3 weeks later after storage of the powder in a pail with a close fitting lid, under atmospheric conditions. Figure 2 shows the thus obtained particle size distribution curves obtained after 5 scans (225 s).

It can be seen from Figure 2 that the two curves are overlapping, which indicates that the particle size distribution obtained for the powder stored for 3 weeks is equivalent to the corresponding freshly spray dried powder indicative of storage stability of the pulverulent compositions according to the present invention. Without wishing to be bound by theory the inventors believe that the actual differences between the monomodal peaks in Figure 1 and the multimodal peaks in Figure 2 are artefacts of the different instruments and their sensitivities.

**Preparation of films from latex compositions for evaluating redispersibility**

Example 14: Preparation of a dried film of this invention from the compounded latex of Example 8

An aliquot of the compounded latex of Example 8 was spread as a film having a wet film thickness of about 150 μm on a glass plate using a bar film applicator. The glass plate was cleaned by washing once with water, and a second time with ethanol before being coated. The coated glass plate was placed into an air-circulating oven set at 110°C for 30 seconds, before placing it in a second air circulating oven set at 50°C for 20 minutes. The polymer-coated glass slide was then removed from the oven and allowed to cool to room temperature.

Example 15: Preparation of a dried film from a compounded emulsion of this invention including sulfanilic acid and salicylic acid

A stock solution, S4, was prepared as follows: To a beaker containing 100 parts by weight of demineralized water were added 25 parts by weight sulfanilic acid, 8.3 parts by weight salicylic acid and 29 parts by weight of a 26 wt.% aqueous solution of lime (Alkodit 26HR from Lhoist) under agitation, to generate a solution that was free of suspended matter.

To 100 parts by weight of the emulsion of Example 1 was added under agitation 11.1 parts by weight of the afore-mentioned stock solution S4, to thereby yield a compounded latex having a concentration of 3.0 wt.% of sulfanilic acid and 1.0 wt.% of salicylic acid (calculated as sulfanilic acid and salicylic acid, respectively, irrespective of the form in which the respective compounds are present in S4) with respect to the total solid content of the emulsion.

A dried film was prepared using this compounded latex composition instead of the compounded latex of Example 8 following the procedure set forth above with respect to Example 14.

Example 16: Preparation of a dried film from a compounded emulsion of this invention including sulfanilic acid

To 100 parts by weight of the emulsion of Example 1 was added under agitation 4.98 parts by weight of the afore-mentioned stock solution S1, yielding a concentration of 3.0 wt.% of sulfanilic acid (calculated as sulfanilic acid, irrespective of the form in which the compound is present in S1), with respect to the total solid content of the emulsion, to thereby yield a compounded latex. A dried film was prepared using this compounded latex composition instead of the compounded latex of Example 8 following the procedure set forth above with respect to Example 14.

Example 17: Preparation of a comparative dried film from the latex of Example 1 without added modifying agent

A dried film was prepared following the procedure set forth above with respect to Example 14, but using the uncompounded latex of Example 1 instead of the compounded latex of Example 8.

Redispersibility of the dried films of Examples 14-17 in water was evaluated according to the following procedure:

The dried polymer film-coated glass plate was placed in a beaker of deionized water, sufficient to completely submerge the glass plate, and the contents agitated using a magnetic stirrer at a speed sufficient to generate a vortex. A film was considered to be redispersible, when the water phase took a milky appearance and displayed an absence of lumps. Moreover, the redispersibility of the film material in a water droplet upon gentle rubbing with a finger was evaluated visually as set forth above for Example 3. The results of these tests are summarized in Table 3.

Table 3:

| Film | Modifying agent(s) (MA(s)) | MA(s) concentration in wt.% with respect to the total solid content of the emulsion | Redispersible? |
|---|---|---|---|
| Example 14 | 4-aminobenzene sulfonic acid and/or salt thereof / salicylic acid and/or salt thereof | 4.0 / 1.0 | Yes |
| Example 15 | 4-aminobenzene sulfonic acid and/or salt thereof / salicylic acid and/or salt thereof | 3.0 / 1.0 | Yes |
| Example 16 | 4-aminobenzene sulfonic acid and/or salt thereof | 3.0 | Yes |

(continued)

| Film | Modifying agent(s) (MA(s)) | MA(s) concentration in wt.% with respect to the total solid content of the emulsion | Redispersible? |
|---|---|---|---|
| Example 17 (Comparative Example) | None | 0 | No |

The results shown in Table 3 indicate that the films produced from the samples made in accordance with this invention (Examples 14-16) exhibited good redispersibility in water, being completely redispersed in water in less than 10 minutes; whereas the comparative film sample produced from a latex without the inclusion of any modifying agent (Example 17) was not redispersible in water.

***Application testing***

***Preparation of hydraulic mortar formulations und evaluation of their applicability***

Example 18: Preparation of a mortar using the pulverulent composition of Example 9

To a stainless steel bowl were charged cement, the pulverulent composition of Example 9, sand, calcium carbonate and deionised water in the amounts indicated in Table 4.

Table 4:

| Component | parts by weight |
|---|---|
| Cement OPC 52,5N[1] | 18.2 |
| Standardized sand, BE 01[2] | 36.4 |
| spray dried pulverulent composition of Example 9 | 22.8 |
| Durcal 15[3] | 5.4 |
| Deionised water | 17.2 |
| [1]: conforms to EN 197-1, supplied by Holcim<br>[2]: supplied by Sibelco<br>[3]: calcium carbonate, supplied by Omya AG | |

The components were mixed twice using a Perrier mixer for standardized mortar and cement, each mixing cycle lasting for 1 minute, separated by 30 seconds, carried out at room temperature.

Example 19 (Comparative Example): Preparation of a mortar using the pulverulent composition of Comparative Example 10

A mortar was prepared as described above for Example 18, except that the pulverulent composition of Comparative Example 10 was used in place of the pulverulent composition of Example 9.

Example 20 (Comparative Example): Preparation of a mortar using the pulverulent composition of Comparative Example 12

A mortar was prepared as described above for Example 18, except that the pulverulent composition of Comparative Example 12 was used in place of the pulverulent composition of Example 9.

Example 21: Preparation of a mortar using the pulverulent composition of Example 13

A mortar was prepared as described above for Example 18, except that the pulverulent composition of Example 13 was used in place of the pulverulent composition of Example 9.

The thus prepared mortar formulations according to Examples 18-21 were each spread by hand in a bespoke silicon mold of rectangular shape measuring 10 cm x 15 cm in sufficient quantity that a layer of approximately 2 mm thickness was obtained after drying for 15 days at room temperature and 50% relative humidity. Herein, the ease with which the hydraulic mortar could be spread within the silicone mold was qualitatively evaluated and rated in accordance with the observed ease with which the hydraulic mix could be troweled into the silicone mold. The spreadability was rated as 'good', if the behavior was as expected for a good quality hydraulic mortar composition; or as 'inadequate', if the mix was either too liquid-like to be workable or too solid-like to be workable. Moreover, the physical appearance of the obtained mortar layer was assessed visually as it dried. The observations are summarized in Table 5.

Table 5:

| Mortar | Physical integrity of the dried layer | Spreadability |
|---|---|---|
| Example 18 | Good | Good |
| Example 19 (Comparative Example) | Good | Inadequate (too fluid) |
| Example 20 (Comparative Example) | Cracked | Inadequate (too solid-like) |
| Example 21 | Good | Good |

Table 5 demonstrates that the mortars formulated with a pulverulent composition according to this invention (Examples 18 and 21) each exhibited a suitable consistency enabling good spreading and working of the mortar and yielded spread films of good physical integrity, without visible cracking of the mortar mix on drying. In contrast thereto, the corresponding mortar formulated with a comparative pulverulent composition based upon US 6,391,952 (Example 19), had a viscosity which was too low to be workable; whilst the mortar formulated with a comparative pulverulent composition based upon US 6,080,806 (Example 20) exhibited a consistency that was too much solid-like with a viscosity which was too high to be workable, and which formed cracks upon drying.

Preparation of hydraulic mortar formulations and evaluation of their usefulness in waterproof membrane hydraulic mortar applications

Example 22: Preparation of a hydraulic mortar intended for waterproof membrane applications using the pulverulent composition of Example 13

To a stainless steel bowl were charged the components listed in Table 6 in the respective amounts indicated therein.

Table 6:

| Component | parts by weight (pbw) |
|---|---|
| Grey Portland Cement 42,5R[4] | 15.00 |
| Quartz sand NE34[5] | 45.45 |
| Durcal 15[3] | 10.00 |
| Bentonite Optibent 602[6] | 2.50 |
| Mica[7] | 1.50 |
| Axilat DF 770DD[8] | 0.30 |
| Arbocel BWW40[9] | 0.15 |
| Culminal CP115[10] | 0.10 |
| spray dried pulverulent composition of Example 13 | 25.00 |

(continued)

| Component | parts by weight (pbw) |
|---|---|
| Deionised water | 24.00 |
| [3]: calcium carbonate, supplied by Omya AG<br>[4]: conforms to EN 197-1, supplied by Italcementi<br>[5]: grain size up to 0.3 mm, supplied by Silbeco<br>[6]: rheology modifier, supplied by BYK<br>[7]: leucophylite, supplied by Imerys Minerals under tradename Plastorit®<br>[8]: defoamer, supplied by Hexion<br>[9]: cellulose fibres, supplied by J. Rettenmaier & Söhne GmbH + Co KG<br>[10]: cellulose ether, supplied by Ashland | |

The components were mixed twice using a Perrier mixer for standardized mortar and cement, each mixing cycle lasting for 1 minute, separated by 30 seconds, carried out at room temperature to thereby yield a hydraulic mortar.

Example 23(Comparative Example): Preparation of a hydraulic mortar mix intended for waterproof membrane applications using the pulverulent composition of Comparative Example 12

A hydraulic mortar was prepared as described above for Example 22, except that the pulverulent composition of Comparative Example 12 was used in place of the pulverulent composition of Example 13.

The prepared hydraulic mortar materials according to Examples 22 and 23 were investigated in terms of their density and viscosity. The density was determined by filling a metallic container having a volume of 200 mL with the respective mortar and determining the weight of the empty and the filled container. The viscosity was measured with a Brookfield model DV-E instrument at room temperature and a rotational speed of 20 rpm. The determined characteristics are summarized in Table 7.

Table 7:

| | Example 22 | Example 23 (Comparative Example) |
|---|---|---|
| Density (g/ml) | 1.51 | 1.49 |
| Viscosity (mPas) | 16,800 | 18,400 |

Membranes were prepared from prepared hydraulic mortar materials according to Examples 22 and 23 by spreading the respective mortar formulation by hand in a bespoke silicon mold of rectangular shape measuring 10 cm x 15 cm in sufficient quantity that a membrane of approximately 2 mm thickness was obtained after drying for 15 days at room temperature and 50% relative humidity.

The physical appearance of the thus obtained dried membranes was assessed visually and the thickness determined with a micrometer. Moreover, the mechanical properties of the membranes were evaluated. For this purpose dumbbell-shaped samples (20 mm of elongation section and 4.5 mm width) of the dried membranes were subjected to tensile testing using an MTS Insight™ 30 electromechanical testing system, at a rate of 5 mm / minute at 23 °C recording the elongation and stress at break of the membrane.

Additionally, the crack bridging ability of the dried mortar film was measured in accordance with EN 14891-2012 applying a separation rate of 0.15mm / minute, at 23°C.

Furthermore, the adhesion was measured in accordance with EN 14891-2012 in a dried state, wet state and a heat aged state. For this purpose a membrane layer was formed from the respective mortar formulation on a concrete support. After drying at room temperature for at least 24 h, a layer of a ceramic tile adhesive was applied over the membrane in a thickness of 6 mm. 5 minutes after applying the adhesive, tiles were placed on the adhesive applying a pressure of 20 N during 30 s. The samples were then subjected to the following conditions before determination of the tensile adhesion:

a) dry state: The sample prepared as described above was stored at room temperature, 50 % relative humidity for 28 days;

b) wet state: The sample prepared as described above was stored at room temperature, 50 % relative humidity for 7 days, and subsequently immersed in water for 21 days;

c) heat aged state: The sample prepared as described above was stored at room temperature, 50 % relative humidity for 14 days, and subsequently for 14 days in an oven at 70°C and cooled to room temperature over 24 h.

For the adhesion measurement a tensile adapter was glued to the tile with an epoxy adhesive and the adhesion measured applying a tensile force with a constant rate of 250 N/s using a traction dynamometer, supplied by Ginger CEBTP.

Moreover, the dried mortar membranes were evaluated for their resistance to water penetration according to EN 14891-2012. For this purpose a layer of the respective mortar formulation was applied twice on a flat concrete surface in order to form a membrane with a total thickness of at least 4 mm. After 28 days of storage at room temperature and 50% relative humidity, a pressure of 150 kPa of water is applied on the membrane over 7 days. The water penetration is subsequently evaluated by measuring the amount of water in the support of the membrane. Moreover, the appearance of the membrane after the penetration test was assessed visually.

The results of these tests are summarized in Table 8.

Table 8:

| | **Example 22** | **Example 23 (comparative Example)** | **Requirement according to EN14891** |
|---|---|---|---|
| Appearance of dried membrane | Uniform, crack-free | Poor, lots of cracks | N/A |
| Membrane thickness [mm] | 2.6 | 2.6 | N/A |
| Elongation at break (%) | 56 | * | N/A |
| Stress at break ($N/mm^2$) | 2 | * | N/A |
| Crack bridging (EN 14891) (mm) | 1.2 | 0.5 | 0.75 |
| Adhesion (EN 14891) (MPa) | | | |
| dry | 1.3 | 1.5 | ≥ 0.5 |
| wet | 0.7 | 0.9 | ≥ 0.5 |
| Heat aged | 0.7 | 0.85 | ≥ 0.5 |
| Water penetration (EN 14891) through membrane (ml) | 0 | 0 | 0 |
| Appearance of membrane after water penetration test | No degradation | No degradation | N/A |
| * = not measured because the sample possessed too many cracks | | | |

Table 8 indicates that the mortar according to this invention (Example 22) yielded a crack-free flexible waterproof membrane, which was sufficiently elastomeric to generate high elongation at break, stress at break values and crack bridging values. In contrast thereto, the comparative example based upon US 6,080,806 (Example 23) yielded film with a lot of cracks and accordingly poor mechanical properties.

Only the membrane obtained from the mortar of this invention (Example 22) was able to achieve the performance requirements according to EN 14891-2012 for waterproof membrane applications under all test conditions.

## Claims

**1.** A water-dispersible pulverulent composition comprising:

(a) at least one film-forming polymer prepared from at least one amide of an ethylenically unsaturated acid and at least one further ethylenically unsaturated monomer, wherein at least a portion of the at least one amide of an ethylenically unsaturated acid is homopolymerized in the absence of the at least one further ethylenically unsaturated monomer, and

(b) at least one aromatic acid according to Formula (I)

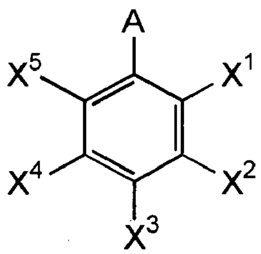

(I)

wherein:

A comprises a carboxylic acid group or a sulfonic acid group, and $X^1$ to $X^5$ are each independently selected from hydrogen, group A as defined above, group B comprising a hydroxyl or amino group, linear or branched $C_1$-$C_{10}$ alkyl, which may optionally be substituted with one or more heteroatom-containing functional groups but being different from groups A or B, and $C_1$-$C_{10}$ alkoxy, under the proviso that at least one of $X^1$ to $X^5$ is group B, or a salt of the aromatic acid of Formula (I).

**2.** The water-dispersible pulverulent composition of claim 1, wherein the amide of an ethylenically unsaturated acid comprises (meth)acrylamide and/or wherein the at least one further ethylenically unsaturated monomer is selected from (meth)acrylic esters, vinyl esters, vinylaromatic monomers, ethylenically unsaturated carboxylic acids, diene monomers, olefins, monomers having at least two ethylenically unsaturated groups or a combination of any of the foregoing.

**3.** The water-dispersible pulverulent composition of claim 2, wherein the at least one film-forming polymer (a) is prepared from:

(i) at least (meth)acrylamide and at least one (meth)acrylic ester,
(ii) at least (meth)acrylamide, and at least one of a vinylaromatic monomer and a diene monomer, or
(iii) at least (meth)acrylamide, at least one (meth)acrylic ester, and at least one of a vinylaromatic monomer and a diene monomer,

preferably being prepared from at least (meth)acrylamide, at least one (meth)acrylic ester, and at least one vinylaromatic monomer.

**4.** The water-dispersible pulverulent composition of any one of claims 2 or 3, wherein the (meth)acrylic ester comprises an $C_1$-$C_{10}$ alkyl (meth)acrylate or an $C_1$-$C_{10}$ hydroxyalkyl (meth)acrylate and/or wherein the vinylaromatic monomer comprises styrene and/or wherein the diene monomer comprises butadiene, the at least one film-forming polymer (a) preferably being a copolymer of (meth)acrylamide, preferably a combination of acrylamide and methacrylamide, an $C_1$-$C_{10}$ alkyl (meth)acrylate, and styrene.

**5.** The water-dispersible pulverulent composition of any one of the preceding claims, wherein in Formula (I):

A represents a carboxylic acid group or a sulfonic group, optionally separated from the aromatic ring by one to four carbon atoms, and
B represents a hydroxyl or amino group, optionally separated from the aromatic ring by one to four carbon atoms, and/or wherein the salt of the at least one aromatic acid is a salt of a divalent metal, preferably an alkaline earth metal salt, more preferably a calcium salt.

**6.** The water-dispersible pulverulent composition of claim 5, wherein in Formula (I):

A represents a carboxylic acid group or a sulfonic acid group,
one of $X^1$ to $X^5$ is group B representing a hydroxyl group or an amino group, and the remaining ones of $X^1$ to $X^5$ are hydrogen.

**7.** The water-dispersible pulverulent composition of claim 6, wherein in Formula (I):

A represents a carboxylic acid group and one of $X^1$ to $X^5$ is group B representing a hydroxyl group, and the

remaining ones of $X^1$ to $X^5$ are hydrogen, the aromatic acid or salt thereof, (b) preferably being salicylic acid (2-hydroxybenzoic acid) or a salt thereof.

**8.** The water-dispersible pulverulent composition of claim 6, wherein in Formula (I):

A represents a sulfonic acid group and one of $X^1$ to $X^5$ is group B representing an amino group, and the remaining ones of $X^1$ to $X^5$ are hydrogen, the aromatic acid or salt thereof, (b) preferably being sulfanilic acid (4-aminobenzenesulfonic acid) or a salt thereof.

**9.** The water-dispersible pulverulent composition of any one of the preceding claims comprising a combination of at least two different aromatic acids (b1) and (b2) having a structure according to Formula (I), that may each also be present in the form of their salts, wherein in (b1) the group B represents a hydroxyl group and in (b2) the group B represents an amino group, wherein preferably (b1) is as defined in claim 7 and (b2) is as defined in claim 8.

**10.** A film-forming composition comprising:

(a) at least one film-forming polymer as defined in any of one of claims 1 to 4,
(b) at least one aromatic acid or a salt thereof as defined in any of aspects 1 or 5 to 9, and
(c) a liquid carrier medium, preferably an aqueous liquid carrier medium.

**11.** The water-dispersible pulverulent composition of any one of claims 1 to 9 or the film-forming composition of claim 10 comprising the at least one aromatic acid or a salt thereof (b) in an amount of from 1 wt. % to 20 wt. %, preferably from 3 wt. % to 10 wt.%, based on the weight of the at least one film-forming polymer.

**12.** The water-dispersible pulverulent composition of any one of claims 1 to 9 or 11 or the film-forming composition of any one of claims 10 or 11, wherein the film-forming polymer (a) is present in the form of particles having an average particle size in a range from 70 nm to 3 $\mu$m, preferably from 150 nm to 2 $\mu$m, more preferably from 200 nm to 1 $\mu$m and/or wherein the film-forming polymer (a) has a glass transition temperature of less than 50°C, preferably less than 30°C, such as less than 10°C or less than 0°C.

**13.** A construction material comprising:

(1) the water-dispersible pulverulent composition of any one of claims 1 to 9 or 11 or 12 or the film-forming composition of any one of claims 10 to 12, and
(2) a mineral binder, wherein the binder is preferably a hydraulically setting material.

**14.** Use of the water-dispersible pulverulent composition of any one of claims 1 to 9 or 11 or 12 or the film-forming composition of any one of claims 10 to 12:

(i) as an adjuvant to a mineral binder,
(ii) in grouts, mortars, adhesives, cement compositions, concrete or coating compositions, preferably for the production of flexible waterproof membranes or sacrificial coatings such as temporary coatings for control of graffiti, or
(iii) as an additive in the production of carpets, as an additive or rheology modifier in oilfield applications or as an control release agent in agrochemical formulations.

**15.** A process for producing the water-dispersible pulverulent composition as defined in any one of claims 1 to 9 or 11 or 12, comprising:

(i) polymerizing at least one amide of an ethylenically unsaturated acid and at least one further ethylenically unsaturated monomer in an aqueous emulsion to form a latex, wherein at least a portion of the at least one amide of an ethylenically unsaturated acid is homopolymerized before addition of the least one further ethylenically unsaturated monomer to the reaction medium,
(ii) adding at least one aromatic acid according to Formula (1) or a salt thereof to the aqueous medium before, during and/or after the polymerization, and
(iii) removing water from the latex, preferably by spray drying.

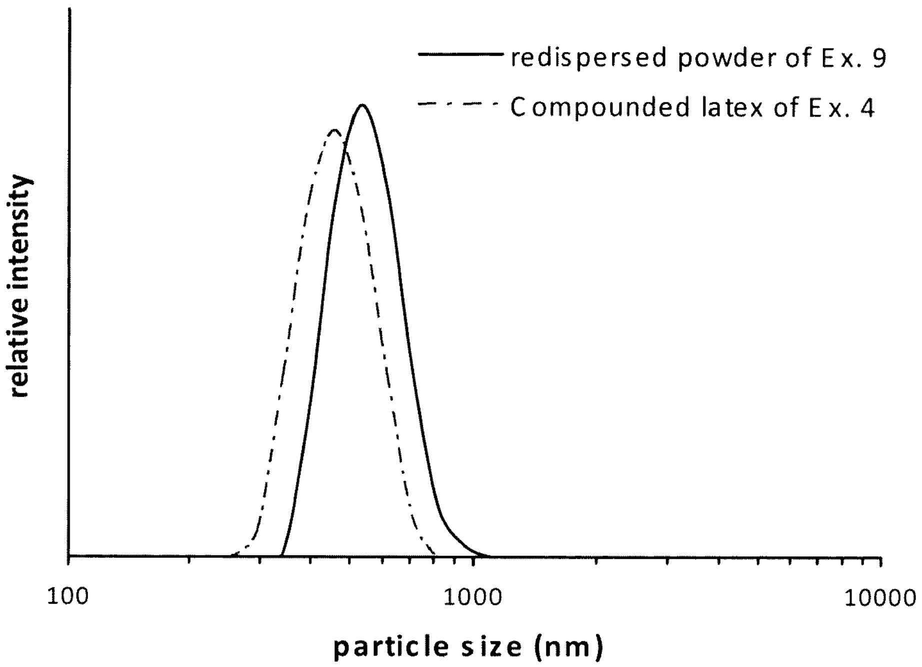
redispersed powder of Ex. 9
Compounded latex of Ex. 4
relative intensity
100
1000
10000
particle size (nm)

Fig. 1

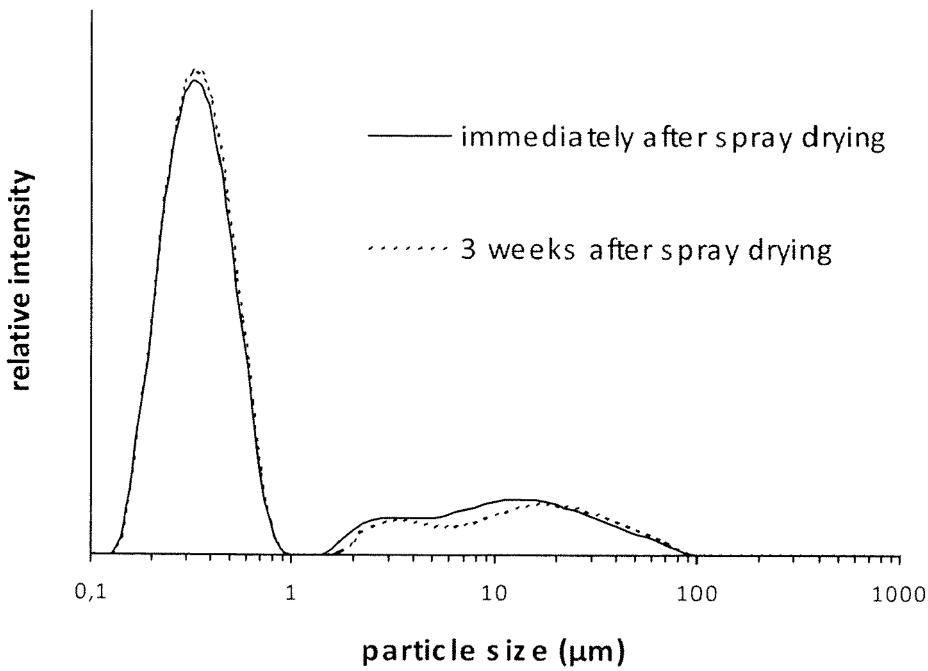
immediately after spray drying
3 weeks after spray drying
relative intensity
0,1
1
10
100
1000
particle size (µm)

Fig. 2

Europäisches Patentamt
European Patent Office
Office européen des brevets

# EUROPEAN SEARCH REPORT

Application Number
EP 17 29 0168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/167539 A1 (PIETSCH INES [DE] ET AL) 19 July 2007 (2007-07-19)<br>* the whole document *<br>* paragraphs [0003], [0004] - [0008], [0011], [0012], [0015] - [0035], [0053] - [0054], [0040]; examples *<br>* paragraph [0078] *<br>----- | 1-15 | INV.<br>C08K5/42<br>C08K5/03<br>C08L33/26 |
| X<br><br>Y | US 5 204 190 A (SAITO TORANOSUKE [US] ET AL) 20 April 1993 (1993-04-20)<br>* the whole document *<br>* columns 2-6; claims 1-4; examples *<br>----- | 1-12<br><br>1-15 | |
| Y | US 2016/280601 A1 (BOUSTINGORRY PASCAL [FR] ET AL) 29 September 2016 (2016-09-29)<br>* the whole document *<br>* paragraphs [0002], [0026] - [0040] *<br>----- | 1-15 | |
| A | CA 2 020 449 A1 (BECKERLE WILHELM F [DE]; DERSCH ROLF [DE]; FRANZMANN GERNOT [DE]; GARE) 15 January 1991 (1991-01-15)<br>* the whole document *<br>----- | 1-15 | TECHNICAL FIELDS SEARCHED (IPC)<br>C08L |

The present search report has been drawn up for all claims

1

| Place of search | Date of completion of the search | Examiner |
|---|---|---|
| The Hague | 4 July 2018 | Droghetti, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 29 0168

This annex lists the patent family members relating to the patent documents cited in the above-mentioned European search report. The members are as contained in the European Patent Office EDP file on
The European Patent Office is in no way liable for these particulars which are merely given for the purpose of information.

04-07-2018

| Patent document cited in search report | Publication date | Patent family member(s) | Publication date |
|---|---|---|---|
| US 2007167539 A1 | 19-07-2007 | AT 370981 T | 15-09-2007 |
| | | AU 2005215896 A1 | 01-09-2005 |
| | | DE 102004009739 A1 | 15-09-2005 |
| | | EP 1720933 A1 | 15-11-2006 |
| | | ES 2290894 T3 | 16-02-2008 |
| | | JP 2007524747 A | 30-08-2007 |
| | | US 2007167539 A1 | 19-07-2007 |
| | | WO 2005080478 A1 | 01-09-2005 |
| US 5204190 A | 20-04-1993 | NONE | |
| US 2016280601 A1 | 29-09-2016 | EP 3066060 A1 | 14-09-2016 |
| | | FR 3012808 A1 | 08-05-2015 |
| | | KR 20160082992 A | 11-07-2016 |
| | | US 2016280601 A1 | 29-09-2016 |
| | | WO 2015067911 A1 | 14-05-2015 |
| CA 2020449 A1 | 15-01-1991 | CA 2020449 A1 | 15-01-1991 |
| | | DE 3923229 A1 | 24-01-1991 |
| | | EP 0407889 A1 | 16-01-1991 |
| | | JP H0356536 A | 12-03-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 2445813 A1
- DE 3143070 A1
- EP 0078449 A2
- US 6391952 B
- US 20110160347 A1
- US 20110160350 A1
- US 20070167539 A1
- US 6080806 A


### Non-patent literature cited in the description


- Chemistry and Technology of Emulsion Polymerization
- Emulsion Polymer Technology. **A. VAN HERK ; H. HEUTS.** Encyclopedia of Polymer Science and Technology. CRC Press, 01 March 1991